# EUROPÄISCHE PATENTSCHRIFT

(11) **EP 3 579 983 B1**
(45) Veröffentlichungstag und Bekanntmachung des Hinweises auf die Patenterteilung: **28.07.2021**
(21) Anmeldenummer: 18718132.6
(22) Anmeldetag: 12.04.2018
(51) Int. Cl.: B07B 1/15, F16C 27/06

(54) **VORRICHTUNG ZUM KLASSIEREN VON KLASSIERGUT**
DEVICE FOR SCREENING MATERIAL TO BE CLASSIFIED
DISPOSITIF DE CRIBLAGE DE PRODUIT À TRIER

(30) Priorität: 04.05.2017 DE 102017004272
(43) Veröffentlichungstag der Anmeldung: 18.12.2019
(73) Patentinhaber: LIG GmbH, 42555 Velbert (DE)
(72) Erfinder: DOPPSTADT, Ferdinand, 42555 Velbert (DE)
(74) Vertreter: Weidener, Jörg Michael
(86) Internationale Anmeldenummer: PCT/EP2018/059349
(87) Internationale Veröffentlichungsnummer: WO 2018/202395

(56) Entgegenhaltungen:
- EP-A1- 1 193 410
- EP-A2- 0 173 638
- DE-A1- 1 806 555
- DE-A1-102013 011 102
- DE-A1-102014 110 816
- DE-B1- 1 782 501
- US-A- 1 699 718
- US-A- 3 047 345

## Beschreibung

Die Erfindung betrifft eine Vorrichtung zum Klassieren von Klassiergut, vorzugsweise in zwei Fraktionen, bevorzugt von Erdmaterial, wie klebendes lehmhaltiges Erdmaterial, insbesondere vorgesehen zur Verwendung in einem Steinbruch, mit einem Maschinenrahmen und mit wenigstens zwei an dem Maschinenrahmen drehbar gelagerten Spiralwellen, wobei wenigstens eine Spiralwelle ein wenigstens eine äußere Schraubenwendel aufweisendes Kernrohr und wenigstens einen Lagerzapfen aufweist.

Vorrichtungen zum Klassieren und/oder zum Sortieren der vorgenannten Art mit Spiralwellen sind in der Praxis bereits bekannt. Grundsätzlich wird zwischen Klassieren und Sortieren unterschieden. Dabei stellt das Klassieren ein mechanisches Trennverfahren für Feststoffgemische dar. Beim Klassieren werden geometrische Merkmale, wie beispielsweise die Größe und/oder die Form, der einzelnen Partikel für den Trennprozess ausgenutzt. Vorzugsweise trennt eine Vorrichtung zum Klassieren das Aufgabegut (Klassiergut) in unterschiedliche Partikelgrößen, insbesondere in Grob- und Feingut, auf. Zum Grobgut wären alle Partikel zugehörig, die größer als eine bestimmte Trennkorngröße sind und analog gehören zum Feingut diejenigen Partikel, die kleiner als die Trennkorngröße ausgeführt sind. Demgegenüber ist das Sortieren ein mechanisches Trennverfahren, bei dem ein Feststoffgemisch mit unterschiedlichen stofflichen Merkmalen in Fraktionen mit gleichen stofflichen Merkmalen aufgeteilt wird. Zum Sortieren werden beispielsweise Eigenschaften wie Dichte, Farbe, Form und/oder Benetzbarkeit genutzt.

Klassiervorrichtungen werden in unterschiedlichen Anwendungsbereichen genutzt, wie beispielsweise in der Sekundärbrennstoffaufbereitung und/oder der Lebensmittelverarbeitung, aber beispielsweise auch in Steinbrüchen, wobei bevorzugt das Erdmaterial von gröberen Steinen getrennt werden kann.

Weiterhin ist es aus der Praxis bekannt, dass es vorteilhaft ist, wenn die Vorrichtung zum Klassieren zumindest im Wesentlichen parallel angeordnete, ineinander eingreifende Spiralwellen, auch Förderschnecken genannt, aufweist. Bei einer bekannten Vorrichtung werden die Spiralwellen einseitig abgestützt bzw. einseitig gelagert. Dabei bilden einseitig abgestützte Spiralwellen einen Kragarm. Hierbei handelt es sich um einen einseitigen eingespannten waagerechten Balken, der einer Belastung ausgesetzt ist, wobei er nur ein Auflager aufweist.

Bei einer Klassiervorrichtung mit einseitig eingespannten Spiralwellen ist sogar eine Trennung in drei Fraktionen möglich. Dabei wird das Aufgabegut in einem bestimmten Winkel auf mehrere, insbesondere in gleicher Drehrichtung drehender, Spiralwellen aufgegeben. Aufgrund des Rollbahneffektes wird das Aufgabegut gleichzeitig sowohl in Längsrichtung als auch seitwärts durch die Spiralwellen gefördert. Hierbei fallen alle Teile, die kleiner sind als die konstruktiv vorgegebenen Zwischenräume, die die Trenngröße definieren, zwischen den Spiralwellen hindurch. Lange, dünne Teile werden in Drehrichtung und dicke, kubische Teile über die frei auslaufenden Wellenenden ausgetragen. Das sogenannte, durch die Zwischenräume gefallene, Freikorn kann, wie auch die beiden Grobmaterialien, mit geeigneten Förderbändern unterhalb der Spiralwellen abtransportiert werden.

Nachteilig bei der aus der Praxis bekannten Klassiervorrichtung mit einseitig gelagerten Spiralwellen ist, dass es bei hohen Belastungen beim Klassieren, wie sie beispielsweise in Steinbrüchen auftreten, zu starken Beschädigungen kommen kann. So können bei der Beschickung aufgrund des auftretenden Impulses beim Auftreffen des Klassiergutes auf die Spiralwellen und/oder durch die entstehenden Spreizkräfte zwischen den Spiralwellen nach dem Auftreffen des Klassiergutes Schäden auftreten.

Im Übrigen ist aus der Praxis bekannt, dass eine Mehrzahl von Spiralwellen, die an einem Maschinenrahmen abgestützt und drehbar gelagert sind, muldenförmig angeordnet sind, wobei zwei in der Mitte befindliche Spiralwellen, die am Tiefpunkt der Mulde angeordnet sind, sich gegeneinander drehen, wohingegen sich die seitlich angeordneten Spiralwellen gleichsinnig wie die ihnen zugewandte Mittelspiralwelle drehen. Aufgrund der muldenförmigen Anordnung der Spiralwellen finden intensive Materialbewegungen statt, die durch das mehrfache Aufsteigen des Aufgabe- bzw. Klassiergutes und das Wiederherunterfallen des Klassiergutes an den Flanken der Vorrichtung zum Klassieren gekennzeichnet sind.

Nachteilig ist auch bei dieser aus der Praxis bekannten Ausführungsform, dass es beim Auftreten starker Beanspruchungen während des Betriebes, wie sie in insbesondere in Steinbrüchen vorkommen, es zu Beschädigungen der Klassiervorrichtung, insbesondere im Bereich der Spiralwellen, kommen kann.

Die DE 17 82 501 B1 betrifft eine Vorrichtung zur Trennung und Reinigung von Feldfrüchten von Abfall mit zumindest einer glatten Walze und zwei dazu parallelen, auf beiden Seiten der glatten Walze liegenden Schneckenwalzen. Die Schneckenwalzen sind durch einen zylindrischen, mit einem Stab schraubenförmig umwickelten und im Wesentlichen hohlen Körper gebildet.

Die EP 0 173 638 A2 betrifft eine Trennvorrichtung mit einer Mehrzahl von Rotationselementen.

Die US 1,699,718 A betrifft eine Sortiervorrichtung mit einer Mehrzahl von Rotationselementen.

Die EP 1 193 410 A1 betrifft eine elastische Lageraufhängung für ein Wellenlager. Das Wellenlager ist radial außenseitig mit zumindest einem Anschlagpuffer aus elastomerem Werkstoff verbunden.

Die DE 10 2013 011 102 A1 betrifft eine Lagerungsanordnung einer Welle an einem Gehäuse für eine Maschine.

Die DE 18 06 555 A1 betrifft eine Sortiereinrichtung für Knollenfrüchte mit einer Mehrzahl von hintereinander angeordneten, regelmäßig profilierten Sortierwalzen.

Die DE 10 2014 110 816 A1 betrifft ein Wellenlager, das ein Wälzlager und einen Außenring umfasst.

Die US 3,047,345 A betrifft eine Antriebswellenlagerung und schwingungsisolierendes Mittel.

Es ist Aufgabe der vorliegenden Erfindung, eine Vorrichtung zum Klassieren bereitzustellen, die die Nachteile der aus der Praxis bekannten Vorrichtungen vermeidet oder zumindest im Wesentlichen reduziert. Insbesondere ist es die Aufgabe der vorliegenden Erfindung, eine Vorrichtung zum Klassieren bereitzustellen, die größeren und/oder hohen Belastungen, wie sie insbesondere bei Verwendung der Vorrichtung in einem Steinbruch zum Klassieren von Erdmaterial auftreten, standhält.

Die vorgenannte Aufgabe wird bei einer Klassiervorrichtung der eingangs genannten Art erfindungsgemäß zumindest im Wesentlichen dadurch gelöst, dass das Kernrohr mittels wenigstens eines elastischen Lagermittels relativ zum Lagerzapfen elastisch gelagert ist.

Im Zusammenhang mit dem Zustandekommen der Erfindung wurde erkannt, dass den hohen, auch in einem Steinbruch auftretenden Beanspruchungen und Belastungen, die während des Betriebes der Vorrichtung auftreten, standgehalten werden kann, und zwar auch bei einer nur einseitigen elastischen Lagerung der Spiralwelle, wenn die Möglichkeit einer Seitwärtsbewegung der Spiralwelle gegeben ist. Die Erfindung ermöglicht dies durch die Realisierung der elastischen Lagerung des Kernrohres mittels des elastischen Lagermittels. Insbesondere wurde in durchgeführten Versuchen festgestellt, dass durch die elastische Lagerung der Spiralwelle im Vergleich zu der aus der Praxis bekannten Vorrichtung zum Klassieren und/oder Sortieren von Aufgabegut um bis zu 80 % höheren Belastungen standgehalten werden kann. Durch das elastische Lagermittel wird den, insbesondere trommelartigen, Spiralwellen ermöglicht, seitlichen Reaktionskräften, bedarfsweise in jeder Richtung quer zur Drehachse, somit insbesondere folglich in radialer Richtung, um einige Millimeter bis Zentimeter auszuweichen. Selbst kritisches Aufgabegut, insbesondere Steine, deren Durchmesser etwa dem lichten Abstand zwischen zwei Spiralwellen, insbesondere zwischen zwei benachbarten äußeren Schraubenwendeln, entspricht, kann durch die erfindungsgemäße Vorrichtung klassiert werden.

Die erfindungsgemäße Lösung bietet aber einerseits nicht nur den Vorteil, dass sich die Spiralwellen während des Klassierbetriebes bedarfsweise aufgrund des elastischen Lagermittels aufspreizen können und so Beschädigungen an den Spiralwellen vermieden werden können. Die elastische Lagerung des Kernrohres führt auch andererseits dazu, dass der Impuls, der sich beim Auftreffen von schwerem Aufgabegut auf die Spiralwellen ergibt, gedämpft wird. Aufgrund dieser Eigenschaften zeichnet sich die erfindungsgemäße Vorrichtung insbesondere dadurch aus, dass sie in einem Steinbruch verwendet werden kann, wobei sie insbesondere sowohl klebende und/oder feste Materialien als auch gröbere Steine klassieren kann.

Vorzugsweise erfolgt die Beladung bzw. Beschickung mit dem Klassiergut mittels eines Baggers, wobei das Aufgabegut von oben her auf die Klassiervorrichtung aufgegeben wird. Vorteilhafterweise ist oberhalb der Zuführung ein Vibrationssieb und/oder ein Gitterrost vorgesehen, so dass bereits eine grobe Vorklassierung erfolgen kann.

Durch die elastische Lagerung des Kernrohres wird der Klassierbetrieb der erfindungsgemäßen Vorrichtung in keinster Weise beeinträchtigt. Nach einer möglichen elastischen Ausweichbewegung der Spiralwelle kehrt die Spiralwelle, insbesondere aufgrund der elastischen Eigenschaften des elastischen Lagermittels, in ihren Ausgangszustand zurück. Letztlich führt die elastische Lagerung dazu, dass die erfindungsgemäße Vorrichtung zum Klassieren durch die höheren standzuhaltenden Belastungen eine höhere Benutzungsdauer bzw. Standzeit im Vergleich zu den aus der Praxis bekannten Vorrichtungen aufweist, so dass erhöhte Reparaturkosten bzw. Instandsetzungskosten vermieden werden.

In den durchgeführten Versuchen wurde im Übrigen festgestellt, dass die erfindungsgemäße Vorrichtung zum Klassieren eine doppelt so hohe Lebensdauer bzw. Standzeit als die aus der Praxis bekannten Klassiervorrichtungen aufweist. Insbesondere ergibt sich bei der Verwendung der erfindungsgemäßen Klassiervorrichtung eine Senkung der laufenden Betriebskosten.

Das elastische Lagermittel weist vorzugsweise eine progressive Federkennlinie auf. Eine progressive Kennlinie bzw. ein progressives Kraft-Weg-Gesetz kennzeichnet, dass eine Feder, worum es sich funktional bei dem elastischen Lagermittel handelt, mit steigender Belastung härter wird, um zu verhindern, dass bei starken Belastungen die Feder durchschlägt und/oder um für ein schnelles Abklingen von Schwingungen zu sorgen. Die Härte gibt dabei den mechanischen Widerstand an, den ein Werkstoff der mechanischen Eindringung eines anderen Körpers entgegensetzt. Aufgrund der progressiven Federkennlinie kann die erfindungsgemäße Vorrichtung zum Klassieren mittels des elastischen Lagermittels außerordentlichen Spreizkräften standhalten.

Bei einer bevorzugten Ausführungsform der erfindungsgemäßen Klassiervorrichtung ist die Spiralwelle beidseitig über je einen Lagerzapfen drehbar gelagert. Der Lagerzapfen ist vorzugsweise endseitig an der Spiralwelle angeordnet. Erfindungsgemäß kann dabei vorgesehen sein, dass wenigstens eine Seite mittels wenigstens eines elastischen Lagermittels relativ zum Lagerzapfen elastisch gelagert ist. Letztlich versteht es sich, dass erfindungsgemäß auch vorgesehen sein kann, dass lediglich eine Seite des Kernrohres mittels wenigstens eines elastischen Lagermittels relativ zum Lagerzapfen elastisch gelagert ist. Vorzugsweise werden jedoch beide Seiten der Spiralwelle über je einen Lagerzapfen drehbar elastisch gelagert. Die beidseitige elastische Lagerung der Spiralwelle ermöglicht es, dass bei einem elastischen Ausweichen, welches insbesondere bei hohen Belastungen hervorgerufen wird, die Spiralwellen nicht aufeinandertreffen bzw. dass eine Beschädigung der Spiralwellen vermieden wird.

Des Weiteren wird das elastische Lagermittel erfindungsgemäß vorzugsweise dadurch charakterisiert, dass es derart ausgebildet ist, dass es eine elastische Ausweichbewegung des, insbesondere beidseitig gelagerten, Kernrohres quer zur Drehachse, insbesondere in radialer Richtung, der Spiralwelle bis zu 3 cm ermöglicht. Gerade durch diese Ausgestaltung ist der Einsatz der erfindungsgemäßen Klassiervorrichtung in einem Steinbruch möglich, da festgestellt worden ist, dass Ausweichbewegungen von bis zu 3 cm benötigt werden, um den Bedingungen in einem Steinbruchbetrieb zu genügen. Trifft beispielsweise ein Stein, der etwa den Durchmesser des lichten Abstandes zwischen zwei benachbarten Spiralwellen aufweist, auf die Spiralwellen, so können die Spiralwellen aufgrund ihrer elastischen Lagerung diesem Stein ausweichen, und wenn der Stein durch die Spiralwellen bzw. den Spalt zwischen den Spiralwellen gezogen wird.

Alternativ oder zusätzlich kann bei einer einseitigen elastischen Lagerung des Kernrohrs und/oder bei einer einseitigen Lagerung der Spiralwellen vorgesehen sein, dass das elastische Lagermittel eine elastische Ausweichbewegung des Kernrohres quer zur Drehachse, insbesondere in radialer Richtung, der Spiralwelle bis zu 3 cm je bzw. pro 1 m Länge des Kernrohres ermöglicht. Demgemäß kann die Ausweichbewegung von der Einspannstelle bis zum ersten Meter Länge des Kernrohres bis zu 3 cm betragen, in einem Abstand von über 1 m bis 2m kann eine Ausweichbewegung von bis zu 6 cm und bei einer Länge von 3 m bis 4 m eine Ausweichbewegung von bis zu 12 cm ermöglicht werden. Die Ausweichbewegung kann letztlich insbesondere zwischen 0,3 und 2 cm pro 1 m Länge des Kernrohres ermöglicht werden.

Im Übrigen ist bei einer weiteren bevorzugten Ausgestaltung des Erfindungsgedankens vorgesehen, dass das elastische Lagermittel wenigstens ein ein elastisches Material aufweisendes Lagerschild aufweist und dass das Lagerschild zwischen dem Kernrohr und dem Lagerzapfen der Spiralwelle elastisch wirksam ist. Insbesondere liegt eine mittelbare elastische Zusammenwirkung zwischen dem Kernrohr und dem Lagerzapfen vor. Durch das Lagerschild wird ein Elastomerlager realisiert, wobei es sich letztlich versteht, dass das Lagermittel bzw. das Elastomerlager nicht ausschließlich aus einem elastischen Material bestehen muss. So ist es denkbar, an den Seitenflächen des Lagermittels ein festeres bzw. nicht oder auch weniger elastisches Material vorzusehen. Das Lagerschild ermöglicht aufgrund seiner elastischen Eigenschaften eine Ausweichbewegung des Kernrohres bzw. der Spiralwelle in radialer Richtung. Vorteilhafterweise unterliegt das Lagerschild einer progressiven Federkennlinie. Bei erhöhter Belastung steigt insbesondere die Quersteifigkeit des Lagermittels an.

Weiterhin hat sich in den durchgeführten Versuchen gezeigt, dass es besonders vorteilhaft ist, wenn das Lagerschild zumindest im Wesentlichen ringförmig und/oder hohlzylindrisch ausgebildet ist. Diese Ausführungsform des Lagerschildes passt sich optimal dem, insbesondere trommelartigen und/oder hohlzylindrischen, Kernrohr an, insbesondere wobei stets ein, zumindest mittelbarer, Kontakt zwischen dem Lagerschild und dem Kernrohr vorhanden ist. Der innere Hohlraum des Lagerschildes dient bevorzugt zur unmittelbaren oder mittelbaren Aufnahme bzw. Anordnung des Lagerzapfens. Die optimale Steifigkeit bzw. Elastizität des Lagerschildes ergibt sich bei einer zumindest im Wesentlichen ringförmigen Ausgestaltung des Lagerschildes durch eine geeignete, insbesondere geringe, Breite, wobei die Wandstärke des Lagerschildes individuell an das Einsatzgebiet der Vorrichtung zum Klassieren angepasst werden kann.

Vorzugsweise weist das Lagerschild im Bereich des elastischen Materials an wenigstens einer Seitenfläche, insbesondere nicht auf der Mantelfläche, eine, insbesondere zumindest im Wesentlichen umlaufende, Materialschwächung, vorzugsweise in Form einer Ausnehmung, auf. Insbesondere ist dabei die Querschnittsfläche des Lagerschildes im Bereich der Ausnehmung spiegelsymmetrisch ausgebildet, wobei die Spiegelachse insbesondere quer zur Rotationsachse der Spiralwelle angeordnet ist. Die Materialausnehmung bzw. die Materialschwächung verbessert eine radiale Ausweichbewegung des Kernrohres mittels des Lagermittels bzw. des Lagerschildes. Die Materialschwächung ergibt verbesserte Federkennwerte des Lagerschildes bei einer Belastung. Das Eindrückverhalten des Lagerschildes wird durch die Materialschwächung optimiert. Die Materialschwächung kann beispielsweise balken- oder stegartig ausgeführt sein, wobei es sich jedoch versteht, dass verschiedene Querschnittsformen der Ausnehmung vorgesehen sein können.

Bei einer weiteren bevorzugten Ausgestaltung ist der Lagerzapfen mit wenigstens einem Lagerschild fest, insbesondere kraftschlüssig, vorzugsweise mittels einer Schraubverbindung, verbunden. Alternativ kann das Lagerschild relativ zum Lagerzapfen, insbesondere mittels eines Wälzlagers, drehbar gelagert sein, insbesondere wobei das Wälzlager abtriebsseitig vorgesehen ist. Vorzugsweise ist eine feste Verbindung zwischen dem Lagerzapfen und dem Lagerschild antriebsseitig vorgesehen, wobei es sich versteht, dass, insbesondere antriebsseitig, sich der Lagerzapfen gemeinsam mit dem Lagerschild und der gesamten Spiralwelle mitdreht. Vorteilhafterweise ist abtriebsseitig ein feststehender Lagerzapfen vorgesehen, wobei das Lagerschild und die Spiralwelle weiterhin drehbar gelagert sind.

Als Wälzlager wird hierbei ein Lager verstanden, bei dem zwischen einem sogenannten Innenring und einem Außenring rollende Körper den Reibungswiderstand verringern. Wälzlager können insbesondere radiale und/oder axiale Kräfte aufnehmen und gleichzeitig die Rotation der Welle oder der so auf eine Achse gelagerten Bauteile ermöglichen. Insbesondere ermöglicht das Wälzlager die drehbare Lagerung der Spiralwelle.

Letztlich versteht es sich, dass auch abtriebsseitig das Lagerschild drehbar mit dem Lagerzapfen fest verbunden sein kann. Vorzugsweise ist dann auch abtriebsseitig eine elastische Lagerung des drehbaren Lagerzapfens und/oder des Kernrohres vorgesehen. Antriebsseitig kann insbesondere die Spiralwelle über den drehbaren, insbesondere fest mit dem Lagerschild verbundenen, Lagerzapfen mitgedreht werden. Bevorzugt ist antriebsseitig wenigstens ein Motor an wenigstens einem Lagerzapfen angeordnet, insbesondere wobei die Spiralwellen untereinander verbunden sind und, bevorzugt gemeinsam, über wenigstens einen Motor angetrieben werden. Vorzugsweise wird antriebsseitig ein Motor und/oder ein Antrieb zur Rotation wenigstens einer Spiralwelle verwendet. Es ist auch denkbar, dass eine Mehrzahl von Motoren und/oder Antrieben zum Antrieb der Spiralwellen genutzt werden können, insbesondere wobei die Drehwinkel der Motoren zueinander synchronisiert sind.

Darüber hinaus ist bei einer weiteren vorteilhaften Ausführungsform vorgesehen, dass das Lagerschild in einem Lagergehäuse der Spiralwelle angeordnet ist. Vorzugsweise ist dann das Lagergehäuse fest mit dem Kernrohr verbunden, insbesondere kraftschlüssig, vorzugsweise verschweißt. Vorteilhafterweise ist abtriebsseitig, insbesondere in Kombination mit dem Wälzlager, vorgesehen, dass das Lagergehäuse vollständig innerhalb des Kernrohres angeordnet ist.

Bei einer weiteren Ausführungsform kann auch vorgesehen sein, dass das Lagergehäuse, insbesondere antriebsseitig, lediglich teilweise in dem Innenraum des Kernrohres angeordnet ist, insbesondere wobei ein Teil des Lagergehäuses aus dem Innenraum des Kernrohres hinausragt.

Vorteilhafterweise ist das Lagerschild formschlüssig mit dem Lagergehäuse verbunden. Insbesondere die formschlüssige Verbindung des Lagerschildes mit dem Lagergehäuse ermöglicht die elastische Lagerung mittels des elastischen Lagermittels des Kernrohres, da durch die formschlüssige Verbindung das Lagerschild gemeinsam mit dem Kernrohr der Rotationsbewegung folgen kann. Darüber hinaus lässt sich aufgrund der formschlüssigen Verbindung das Lagerschild in einfacher Weise in das Lagergehäuse einsetzen und/oder aus dem Lagergehäuse herauslösen bzw. entfernen. Dabei versteht es sich, dass das Lagerschild, insbesondere unmittelbar, zwischen dem Lagergehäuse und dem Lagerzapfen elastisch wirksam ist, insbesondere wobei die mittelbare elastische Zusammenwirkung durch das Lagerschild zwischen dem Kernrohr und dem Lagerzapfen vorgesehen ist.

Bei einer vorteilhaften Ausgestaltung der erfindungsgemäßen Vorrichtung ist vorgesehen, dass zur formschlüssigen Verbindung des Lagerschildes mit dem Lagergehäuse das Lagergehäuse innenseitig eine Innenverzahnung aufweist. Weiterhin ist bevorzugt vorgesehen, dass eine Zahnkupplung zwischen dem Lagergehäuse und dem Lagermittel vorhanden ist. Als Zahnkupplung wird dabei eine weitgehend drehstarre und insbesondere formschlüssige Kupplung bezeichnet, die das Drehmoment über ineinander gefügte Außen- und Innenverzahnungen überträgt. Vorzugsweise ist die Innenverzahnung in der Regel gerade ausgeführt, insbesondere wobei die Außenverzahnung nahezu ausschließlich ballig ausgeführt ist. Dies ermöglicht insbesondere den Ausgleich von winkligem Wellenversatz.

Bei einer weiteren bevorzugten Ausgestaltung weist wenigstens ein Lagerschild eine zu der Innenverzahnung des Lagergehäuses korrespondierende Außenverzahnung auf, insbesondere wobei die Innenverzahnung des Lagergehäuses in die Außenverzahnung des Lagerschildes eingreift, vorzugsweise zur Herstellung einer Zahnkupplung. Insbesondere wird somit sowohl die Aufgabe der Drehmomentübertragung als auch die Umlauf-Abstützung zur antriebsseitigen Spiralwelle übernommen.

Gemäß einer weiteren Ausführungsform des Erfindungsgedankens ist vorgesehen, dass das Lagerschild rotationssymmetrisch zumindest im Bereich der Ausnehmung des Lagerschildes und/oder bis zur Außenverzahnung des Lagerschildes, insbesondere exklusive der Außenverzahnung, vorzugsweise in Bezug zu einer Drehachse der Spiralwelle, ausgebildet ist. Ein rotationssymmetrisches Lagerschild passt sich insbesondere der Drehbewegung der Spiralwelle an, insbesondere da die Ausweichbewegung des Kernrohres dann durchgeführt wird, wenn sich die gesamte Spiralwellenanordnung dreht. Um stets dieselbe Drehausweichbewegung zu gewährleisten und dieselben Kennwerte des Elastomerlagers in jeder Betriebssituation sicherzustellen, ist die rotationssymmetrische Ausbildung zumindest im Bereich der Ausnehmung des Lagerschildes besonders vorteilhaft.

Ein anderer weiterer vorteilhafter Aspekt der vorliegenden Erfindung liegt vorzugsweise darin, dass das elastische Lagermittel wenigstens zwei Lagerschilder aufweist. Dabei wurde in den Versuchen festgestellt, dass insbesondere zwei Lagerschilder eine bestmögliche bzw. optimierte Federwirkung des Elastomerlagers erzeugen. Die durchgeführten Versuche haben dabei ergeben, das die Realisierung von zwei schwächeren Lagerschildern bessere Ergebnisse erbringen, als ein einzelnes stärkeres Lagerschild. Vorzugsweise ist dabei das Wälzlager zwischen den Lagerschildern, insbesondere abtriebsseitig, vorgesehen, insbesondere wobei die Lagerschilder mit dem Wälzlager fest verbunden sind. Dabei schützt insbesondere die elastische Verbindung zwischen der Wälzlagereinheit und der Spiralwelle auch die Wälzlagerung gegen Winkelversatz der Spiralwelle in der Maschine. Insbesondere kann dieser Winkelversatz durch Verzahnung des Maschinenrahmens und/oder durch betriebsbedingte Überlastungen hervorgerufen werden.

Darüber hinaus versteht es sich, dass die elastischen Lagermittel unterschiedlich ausgebildet sein können, insbesondere wobei bei dem abtriebsseitigen Lagermittel bevorzugt zwei Lagerschilder weiter als beim antriebsseitigen Lagermittel voneinander beabstandet sind. Eine größere Beabstandung der Lagerschilder beim abtriebsseitigen Lagermittel ergibt sich insbesondere dadurch, dass bevorzugt zwischen den Lagerschildern abtriebsseitig ein Wälzlager zur drehbaren Lagerung der Spiralwelle, insbesondere bei einem feststehenden Lagerzapfen, vorgesehen ist. Auch die vorangegangenen Ausführungen verdeutlichen, dass bei einer beidseitigen Lagerung der Spiralwelle unterschiedliche Lagermittel vorhanden sein können, insbesondere wobei sich auch die elastischen Lagermittel bei einer beidseitigen elastischen Lagerung unterscheiden können.

Bevorzugt ist das Material des Lagerschildes so ausgebildet, dass das Lagermittel als Verformungslager die Bewegungen bzw. die Verschiebung der Spiralwelle nicht durch eine mechanische Konstruktion, sondern durch Verformung des Lagerschildes ermöglicht. Vorzugsweise ist das Lagermittel zumindest in seinem die Elastizität gewährleistenden Bereich unbewehrt, wobei es sich jedoch grundsätzlich versteht, dass das Lagerschild auch bewehrt sein kann. Als Bewehrung ist die Verstärkung des Lagerschildes durch ein weiteres Objekt oder Mittel zu verstehen, wodurch insbesondere einer höheren Druck- und Zugfestigkeit standgehalten werden soll. Eine Bewehrung ist beispielsweise mittels eines hochfesten Textilgewebes möglich.

Vorteilhafterweise weist das Lagerschild wenigstens ein Material aus einem formfesten und elastisch verformbaren Kunststoff, insbesondere ein Elastomer, bevorzugt ein Kautschukelastomer, weiter bevorzugt Butadien-Acrylnitril-Kautschuk (NBR) und/oder Chloropren-Kautschuk (CR) und/oder Ethylen-Propylen-Dien-Kautschuk (EPDM), und/oder Naturkautschuk (NR), auf. Als Material für das Lagerschild eignet sich insbesondere ein Material auf Kautschukbasis, da sich dieses bei, insbesondere hohen, Druckbelastungen elastisch verformt, jedoch anschließend - nach Beendigung der Belastung - in seine ursprüngliche, unverformte Gestalt zurückkehrt. Ein Elastomerlager ist bevorzugt nahezu inkompressibel ausgestaltet, insbesondere wobei es bei einer Druckbelastung volumenkonstant bleibt und bevorzugt bei einer gleichzeitigen Ausdehnung der Seitenflächen federt. Zur Festlegung des Materials des Lagerschildes können verschiedene charakteristische Bemessungswerte genutzt werden. Beispielsweise zeigt insbesondere die zulässige Druckspannung, welchem maximalen Druck das Lagerschild standhält.

Bei einer weiteren bevorzugten Ausgestaltung ist vorgesehen, dass das Material des Lagerschildes eine zulässige Druckspannung größer 0,01 N/mm², bevorzugt größer 1 N/mm², weiter bevorzugt zwischen 1 bis 50 N/mm², weiter bevorzugt zwischen 1 bis 20 N/mm² und insbesondere zumindest im Wesentlichen 15 N/mm², aufweist. Hält das Material des Lagerschildes bevorzugt einer Druckspannung von 15 N/mm² stand, so ergibt sich eine mögliche extreme Druckbeanspruchung. Die Druckbeanspruchung richtet sich insbesondere auch danach, wie groß die Lagerbreite im Verhältnis zur Lagerdicke und Verschiebung ausgeführt ist.

Weiterhin hat sich gezeigt, dass durch die vorgenannte Ausgestaltung des, insbesondere abtriebsseitigen, elastischen Lagermittels eine Möglichkeit zur Nachschmierung gegeben ist. Demgemäß ist bei einer weiteren bevorzugten Ausführungsform vorgesehen, dass im Bereich des elastischen Lagermittels, insbesondere abtriebsseitig, eine Schmiereinrichtung, insbesondere für Schmierfett, vorgesehen und wenigstens ein Schmierkanal im Lagerzapfen mit wenigstens einem Schmiernippel an der äußeren Stirnseite des Lagerzapfens angeordnet ist. Vorzugsweise ist bei dieser Ausführungsform der Lagerzapfen feststehend ausgeführt, so dass sich auch die Schmiereinrichtung nicht mit der Spiralwelle mitdreht bzw. rotiert. Die Schmiereinrichtung kann insbesondere eine Nachschmierung des Wälzlagers ermöglichen, wobei natürlich auch grundsätzlich die Wälzlagerung als dauergeschmierte Versionen ausgeführt sein kann. Die Schmiereinrichtung bietet hierbei die Möglichkeit, eine Nachschmierung, insbesondere unter Einhaltung von längeren Schmierintervallen, vorzugsweise wöchentlich oder monatlich, zu ermöglichen. Vorzugsweise ist das abtriebsseitige Lagermittel nahezu luftdicht ausgeführt, so dass durch die Schmiereinrichtung lediglich einzelne Tropfen des Schmierfetts eingebracht werden können. Insbesondere antriebsseitig lässt sich die Nachschmierung relativ leicht durchführen, da vorzugsweise dieser Bereich, insbesondere aufgrund des Antriebes, leicht zugänglich ist.

Im Übrigen ist bei einer weiteren Ausgestaltung der Schmiereinrichtung vorgesehen, dass dem Schmiernippel eine Schutzkappe und/oder Schutzschraube zur Abdeckung zugeordnet ist. Diese Abdeckung schützt dabei insbesondere den Schmiernippel vor Beschädigung und/oder Verschmutzung, so dass sich insbesondere eine erhöhte Benutzungsdauer der gesamten Schmiereinrichtung durch Schutz des Schmiernippels ergibt.

Des Weiteren betrifft die Erfindung eine Vorrichtung zum Klassieren von Klassiergut, vorzugsweise Erdmaterial, bevorzugt klebendes lehmhaltiges Erdmaterial, insbesondere vorgesehen zur Verwendung in einem Steinbruch, mit einem Maschinenrahmen und mit wenigstens zwei an den Maschinenrahmen drehbar gelagerten Spiralwellen. Erfindungsgemäß versteht es sich, dass die Vorrichtung zum Klassieren von Klassiergut in einer vorgenannten Ausgestaltung ausgeführt ist. Erfindungsgemäß ist vorgesehen, dass, insbesondere abtriebsseitig, wenigstens ein elastisches Lagermittel mit wenigstens einer Lagerstütze vorgesehen ist, um eine elastische Ausweichbewegung der Spiralwelle zu ermöglichen.

Die durch die Lagerstütze ermöglichte seitliche Ausweichbewegung der Spiralwelle ergibt, dass die gesamte Vorrichtung zum Klassieren höheren Beanspruchungen standhalten kann, da insbesondere aufgrund der elastischen Lagerung höhere Spreizkräfte und/oder Druckbelastungen ausgeglichen werden können. Insbesondere aufgrund der Schwenkbewegung und/oder seitlichen Ausweichbewegung ergibt sich ein leicht öffnender, keilförmiger Spalt zwischen zwei benachbarten Spiralwellen, der insbesondere das Abfördern von Steinen mit grenzwertigen Größen, insbesondere mit einem Durchmesser der etwa dem lichten Abstand zwischen zwei benachbarten Spiralwellen entspricht, sicherstellt.

Es ergibt sich nicht nur eine höhere Belastbarkeit und/oder Produktionsdauer der gesamten Vorrichtung zum Klassieren, sondern auch eine Senkung der Betriebskosten bei Benutzung der Vorrichtung, da sich aufgrund der, insbesondere abtriebsseitigen, elastischen Lagerung mittels der Lagerstütze eine Senkung der Anzahl der benötigten Reparaturen ergibt, da die Spiralwellen höheren Belastungen standhalten können. Vorzugsweise dient das elastische Lagermittel dabei als Federmittel, insbesondere wobei das Federmittel zwischen einem festen Maschinenrahmen der erfindungsgemäßen Vorrichtung und einer festen Lagerbuchse für den Lagerzapfen einer Spiralwelle vorgesehen ist. Das Federmittel gewährleistet, dass eine elastische Verformung des Lagermittels möglich ist, wobei das Lagermittel nach der Beanspruchung in seine ursprüngliche Form zurückkehrt.

Es versteht sich dabei letztlich, dass die Spiralwelle, insbesondere analog zu den bereits geschilderten Ausführungsformen, wenigstens ein eine äußere Schraubenwendel aufweisendes Kernrohr und wenigstens einen Lagerzapfen aufweist.

Vorzugsweise ist die Lagerstütze derart ausgebildet, dass die Spiralwelle quer zu ihrer Drehachse, bevorzugt in radialer Richtung, eine Ausweichbewegung, insbesondere eine Schwenkbewegung, um bis zu 3 cm durchführen kann. Vorzugsweise gerade diese Schwenkbewegung gewährleistet, dass das Abfördern von Steinen mit grenzwertigen Größen ermöglicht wird, wobei sich dabei bevorzugt keine Beschädigung der Spiralwellen ergibt. Auch bei dieser Ausgestaltung werden aber nicht nur Probleme, die sich aufgrund des Aufspreizens der Spiralwellen während des Klassierbetriebes ergeben, vermieden, sondern auch eine Dämpfung von sich ergebenden Impulsen beim Aufwerfen von Klassiergut auf die Spiralwellen bei dieser Ausgestaltung ermöglicht.

Darüber hinaus ist bei einer vorteilhaften Ausgestaltung des Erfindungsgedankens vorgesehen, dass die Lagerstütze eine Lagerbuchse und eine mit der Lagerbuchse verbundene Blattfeder als Federmittel aufweist. Durch das Federmittel ergibt sich abtriebsseitig quer zur Drehachse ein elastisches, federndes und/oder nachgiebiges Verhalten. Insbesondere wird eine Ausweichbewegung durch die Nachgiebigkeit des Stützlagers ermöglicht. Grundsätzlich ist es auch denkbar, die Nachgiebigkeit des Stützlagers mittels eines Gelenks zu ermöglichen. Bei einer weiteren bevorzugten Ausführungsform ist vorgesehen, dass die Lagerstütze mit einem, bevorzugt ein elastisches Material aufweisendes, Maschinenelement elastisch gelagert wird. Bei dieser Ausführungsform werden vorzugsweise die Füße der Lagerstütze bzw. das untere Ende der Lagerstütze elastisch gelagert, insbesondere wobei die Lagerstütze steif ausgebildet ist. Das Maschinenelement weist vorzugsweise ein Elastomer und/oder ein Material aus einem formfesten und elastisch verformbaren Kunststoff, bevorzugt ein Kautschukelastomer, weiter bevorzugt Butadien-Acrylnitril-Kautschuk (NBR) und/oder Chloropren-Kautschuk (CR) und/oder Ethylen-Propylen-Dien-Kautschuk (EPDM) und/oder Naturkautschuk (NR), auf. Vorteilhafterweise ist das Maschinenelement in Form eines Elastomer-Lagerblockes ausgeführt. Das Maschinenelement ermöglicht die, insbesondere abtriebsseitige, elastische Lagerung der Spiralwelle.

Ein anderer Aspekt der vorliegenden Erfindung liegt vorzugsweise darin, dass das Klassiergut nach Aufgabe auf die Spiralwellen eine Verweildauer von über 1 s, bevorzugt über 3 s, weiter bevorzugt zwischen 4 bis 20 s und insbesondere zumindest im Wesentlichen zwischen 5 bis 15 s aufweist. Diese Verweildauer des Klassiergutes kann sicherstellen, dass das Klassiergut sicher in zwei Fraktionen aufgeteilt werden kann, insbesondere wobei ein bestmögliches Verhältnis zwischen sauberer Trennung und möglichst geringer Klassierdauer vorhanden ist.

Bei einer weiteren bevorzugten Ausführungsform der erfindungsgemäßen Vorrichtung sind eine Mehrzahl von Spiralwellen vorgesehen, wobei die Spiralwellen vorzugsweise ineinander eingreifen. Jede Spiralwelle rotiert dabei bevorzugt um ihre Längsachse und/oder Drehachse, insbesondere ihre Rotationsachse. Vorzugsweise weisen dabei wenigstens zwei benachbarte Spiralwellen denselben Rotationsdrehsinn auf. Vorteilhafterweise sind die Rotationsachsen von wenigstens drei Spiralwellen nicht in einer gemeinsamen Ebene angeordnet. Dabei versteht es sich letztlich, dass die Spiralwellen an wenigstens einer Seite am Maschinenrahmen abgestützt werden können.

Im Übrigen bilden die Spiralwellen bevorzugt eine Klassierfläche, die insbesondere wenigstens in einem Teilbereich gewölbt ausgebildet ist. Alternativ oder zusätzlich ist es vorteilhafterweise auch möglich, dass die Klassierfläche in einem anderen Teilbereich eben ausgebildet ist. Insbesondere kann vorgesehen sein, dass die durch die Rotationselemente bzw. Spiralwellen gebildete Klassierfläche in einem Bereich, auf den das unklassierte Klassiergut aufgegeben wird, eben ausgebildet ist. Auf diese Weise wird bevorzugt ein besonders gutes Klassierergebnis erreicht, weil der Teil des Klassiergutes, der eigentlich zwischen den Rotationselementen - Spiralwellen - hindurch fallen müsste, länger in deren Einflussbereich verbleibt und dadurch die Wahrscheinlichkeit des gewünschten Durchfallens erhöht wird. Letztlich wird hierdurch das Klassierergebnis signifikant verbessert. Auch das Aneinanderhaften von verschiedenen Teilen des Klassiergutes, insbesondere bei lehmhaltigen klebenden Materialien, kann gelöst werden. Vorteilhafterweise kann vorgesehen sein, dass die durch die Spiralwellen gebildete Klassierfläche eine Mulde ausbildet und/oder Teil einer Mulde ist.

Bei einer besonderen Ausführung ist vorgesehen, dass die äußere Schraubenwendel einer Spiralwelle bis an das äußere Kernrohr einer benachbarten Spiralwelle reicht. Insbesondere definiert der Abstand benachbarter Kernrohre die Trenngröße bzw. den Trennpartikeldurchmesser des Trennkorns.

Bei einer weiteren vorteilhaften Ausführungsform der erfindungsgemäßen Vorrichtung ist vorgesehen, dass die Spiralwellen unterschiedliche Kernrohre aufweisen, insbesondere wobei die in der Mitte der Klassierfläche angeordneten Kernrohre einen größeren Durchmesser und/oder eine größere Wandstärke aufweisen. Diese unterschiedliche Ausbildung der Kernrohre erhöht insbesondere die Robustheit der erfindungsgemäßen Vorrichtung, so dass sich insbesondere eine erhöhte Benutzungsdauer ergibt. Insbesondere ist bei dieser vorteilhaften Ausführungsform die Mitte der Klassierfläche der tiefste Punkt der muldenförmigen Anordnung der Spiralwellen. Durch eine Erhöhung der Wandstärke und des Durchmessers der Kernrohre in diesem Bereich ergibt sich insbesondere eine verstärkte Version, die bevorzugt höheren Druckbelastungen und stärkerem Verschleiß standhält. Gerade in der Mitte der Mulde treten hohe Druckbeanspruchungen und größere Abnutzungen auf, da in diesem Bereich vorzugsweise das Klassiergut länger verweilt.

Des Weiteren ist bei einer besonderen Ausführung vorgesehen, dass zwei Spiralwellen einen unterschiedlichen Drehsinn aufweisen. Dabei weisen bevorzugt die Spiralwellen in einem ersten Teilbereich der Klassierfläche denselben ersten Rotationsdrehsinn auf und die Spiralwellen in einem zweiten, von dem ersten Teilbereich verschiedenen Teilbereich der Klassierfläche einen dem ersten Rotationsdrehsinn entgegengesetzten Rotationsdrehsinn auf. Grundsätzlich versteht es sich hierbei, dass diese Ausbildung der unterschiedlichen Rotationsdrehsinne auch zwischen benachbarten Spiralwellen ausgeführt sein kann. Durch diese Ausbildung der erfindungsgemäßen Vorrichtung kann vorteilhafterweise vorgesehen sein, dass eine, insbesondere zur Mitte der Klassierfläche und/oder zum tiefsten Punkt einer Mulde, gerichtete Kraft auf das Klassiergut ausgeübt wird, so dass sich dieses bevorzugt in den mittigen Bereich der Klassierfläche begibt. Diese erwünschte Transportwirkung ergibt sich erst durch diese spezielle Ausgestaltung der verschiedenen Rotationssinne, insbesondere wobei diese erwünschte Transportwirkung nicht eintritt, wenn benachbarte Rotationselemente/Spiralwellen abwechselnd einen entgegengesetzten Rotationssinn aufweisen.

Bei einer weiteren besonderen Ausführung der erfindungsgemäßen Vorrichtung ist vorgesehen, dass zwischen dem ersten Teilbereich und dem zweiten Teilbereich der Klassierfläche eine Klassierflächenmitte und/oder der tiefste Punkt der Mulde angeordnet ist. Die Mulde ist dabei koaxial zu den Spiralwellen, bevorzugt spiegelsymmetrisch, ausgebildet. Bezogen auf die Muldenmitte sind der erste und der zweite Teilbereich also spiegelsymmetrisch.

Es versteht sich, dass grundsätzlich die Förderrichtung des zu klassierenden Materials auf den Spiralwellen quer und/oder parallel zur Achsrichtung und/oder Drehachse der Spiralwellen ausgerichtet sein kann. Insbesondere definiert die Förderrichtung des zu klassierenden Materials die Abwurfrichtung bzw. den Abwurfbereich der ersten Fraktion des klassierten Materials. Die zweite Fraktion wird insbesondere unterhalb der erfindungsgemäßen Vorrichtung bzw. unterhalb der Spiralwellen abgeworfen.

Vorzugsweise werden die Spiralwellen mit der gleichen Geschwindigkeit und insbesondere mit unterschiedlichen Rotationsrichtungen bzw. Rotationsdrehsinnen angetrieben. Dabei drehen die Spiralwellen im ersten Teilbereich bevorzugt in die eine Richtung und die Spiralwellen im anderen Teilbereich bevorzugt in die andere Richtung, und zwar jeweils derart, dass das Aufgabe- bzw. Klassiergut in die Muldenmitte bewegt wird.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigt:
- Fig. 1: eine schematische perspektivische Ansicht einer erfindungsgemäßen Vorrichtung zum Klassieren;
- Fig. 2: eine weitere schematische perspektivische Ansicht einer erfindungsgemäßen Vorrichtung zum Klassieren;
- Fig. 3: eine schematische perspektivische Ansicht einer erfindungsgemäßen Spiralwelle;
- Fig. 4: eine schematische perspektivische Darstellung der Spiralwelle entlang des Schnittes IV - IV gemäß Fig. 3;
- Fig. 5: eine schematische perspektivische Detailansicht A des Lagermittels gemäß Fig. 4;
- Fig. 6: eine schematische perspektivische Detailansicht B des Lagermittels gemäß Fig. 4;
- Fig. 7: eine schematische perspektivische Darstellung des Lagermittels;
- Fig. 8: eine weitere schematische perspektivische Darstellung des Lagermittels;

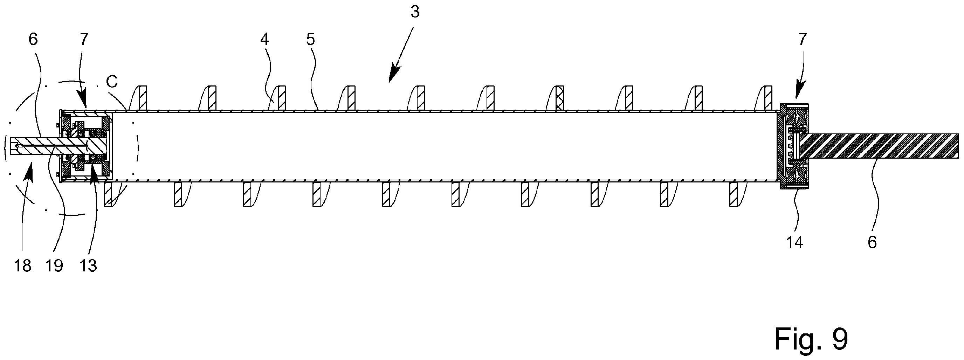

- Fig. 9: eine Querschnittsansicht einer weiteren Ausführungsform einer erfindungsgemäßen Spiralwelle;
- Fig. 10: eine Querschnittsansicht des Detailausschnittes C gemäß Fig. 9;
- Fig. 11: eine schematische perspektivische Ansicht einer weiteren Ausführungsform einer erfindungsgemäßen Spiralwelle;
- Fig. 12: eine Querschnittsansicht einer erfindungsgemäßen Spiralwelle gemäß Fig. 11;
- Fig. 13: eine Querschnittsansicht des Detailausschnittes D gemäß Fig. 12 einer erfindungsgemäßen Spiralwelle; und
- Fig. 14: eine Querschnittsansicht des Detailausschnittes E gemäß Fig. 12 einer erfindungsgemäßen Spiralwelle

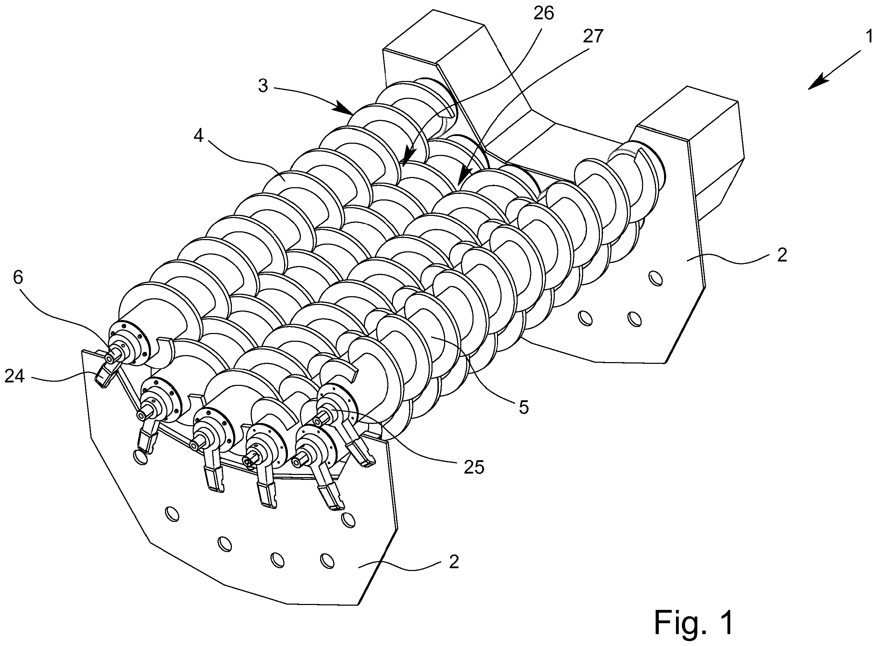

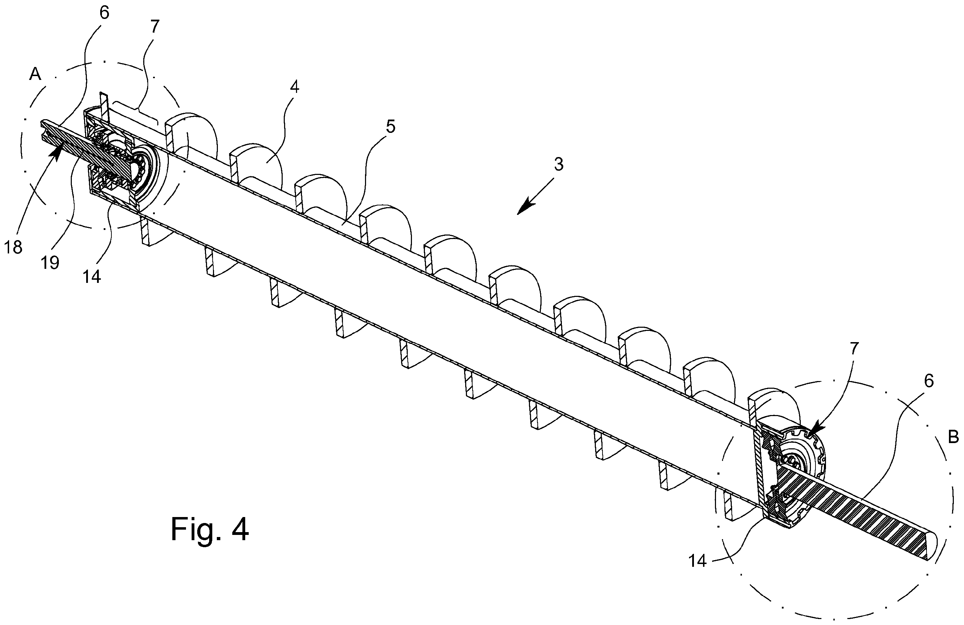

Fig. 1 zeigt eine Vorrichtung 1 zum Klassieren vom Klassiergut mit einem Maschinenrahmen 2 und mit wenigstens zwei an dem Maschinenrahmen 2 drehbar gelagerten Spiralwellen 3, wobei wenigstens eine Spiralwelle 3 ein wenigstens eine äußere Schraubenwendel 4 aufweisendes Kernrohr 5 und wenigstens einen Lagerzapfen 6 aufweist. Nicht dargestellt ist, dass die Vorrichtung 1 vorzugsweise eine Trennung in zwei Fraktionen vollzieht, insbesondere wobei die eine Fraktion unterseitig der Spiralwellen 3 abgeworfen wird. Weiter nicht dargestellt ist, dass die Vorrichtung 1 bevorzugt in einem Steinbruch verwendet wird, insbesondere wobei als Klassiergut klebendes, lehmhaltiges Erdmaterial und feine und/oder gröbere Steine vorgesehen sind. Die Vorrichtung 1 zeichnet sich gemäß Fig. 4 dadurch aus, dass das Kernrohr 5 mittels wenigstens eines elastischen Lagermittels 7 elastisch gelagert ist. Die elastische Lagerung erfolgt bevorzugt in der Weise, dass das Kernrohr 5 relativ zum Lagerzapfen 6 aufgrund der Elastizität des elastischen Lagermittels 7 bewegbar ist.

Fig. 4 zeigt ferner, dass das elastische Lagermittel 7 beidseitig an der Spiralwelle 3 vorgesehen ist. In einer weiteren, nicht dargestellten Ausführungsform kann vorgesehen sein, dass das elastische Lagermittel 7 lediglich an einer Seite, insbesondere antriebsseitig oder abtriebsseitig, angeordnet ist. Bei der einseitigen Anordnung des elastischen Lagermittels 7 an die Spiralwelle 3 kann das andere Ende der Spiralwelle 3 ebenfalls gelagert sein. Letztlich versteht es sich hierbei, dass weiter vorgesehen sein kann, dass bei einer einseitigen elastischen Lagerung mittels eines elastischen Lagermittels 7 der Spiralwelle 3 das der im elastischen Lagermittel 7 gegenüberliegende Ende der Spiralwelle 3 auch nicht gelagert und/oder abgestützt am Maschinenrahmen 2 sein kann.

Darüber hinaus stellt Fig. 1 dar, dass die Spiralwelle 3 beidseitig über je einen Lagerzapfen 6 drehbar gelagert ist. Zusätzlich verdeutlicht die Fig. 1, dass die Spiralwelle 3 an dem Maschinenrahmen 2 abgestützt ist.

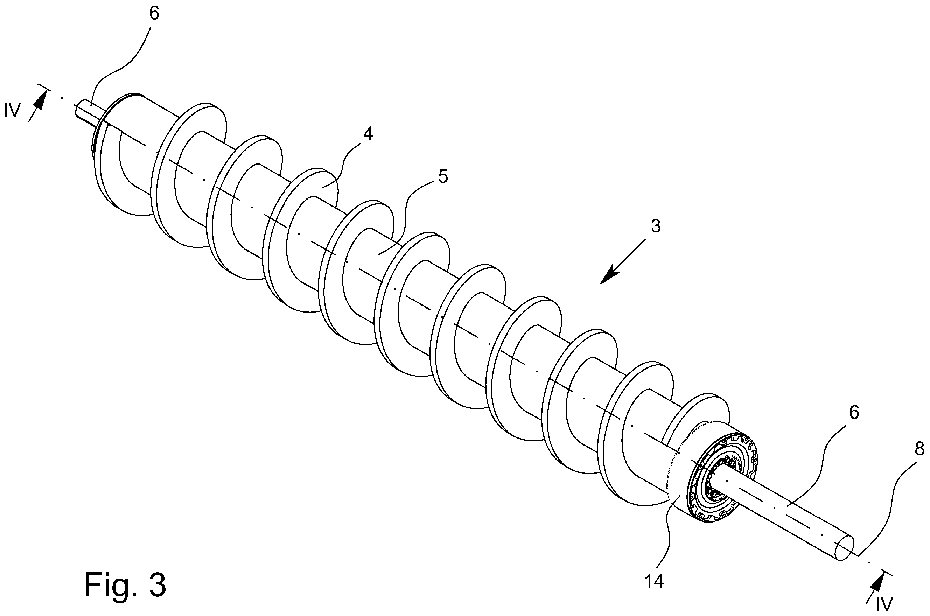

Im Übrigen ist in den Ausführungsbeispielen nicht dargestellt, dass das elastische Lagermittel 7 derart ausgebildet ist, dass es eine elastische Ausweichbewegung des Kernrohres 5 quer zur Drehachse 8 (gemäß Fig. 3) der Spiralwelle 3 bis zu 3 cm ermöglicht.

Des Weiteren zeigt Fig. 4, dass das elastische Lagermittel 7 wenigstens ein ein elastisches Material aufweisendes Lagerschild 9 aufweist. Dabei ist das Lagerschild 9 zwischen dem Kernrohr 5 und dem Lagerzapfen 6 der Spiralwelle 3 elastisch wirksam. Die Fig. 4 zeigt, dass das elastische Zusammenwirken zwischen dem Lagerschild 9 und dem Kernrohr 5 sowie dem Lagerzapfen 6 der Spiralwelle 3 mittelbar vorliegt, da das Kernrohr 5 durch ein Lagergehäuse 14 von dem Lagerschild 9 getrennt ist. Das elastische Lagermittel 7 ist gemäß Fig. 4 beidseitig an der Spiralwelle 3 angeordnet, wobei unterschiedliche Ausführungsformen des elastischen Lagermittels 7 an den Enden der Spiralwelle 3 vorgesehen sind.

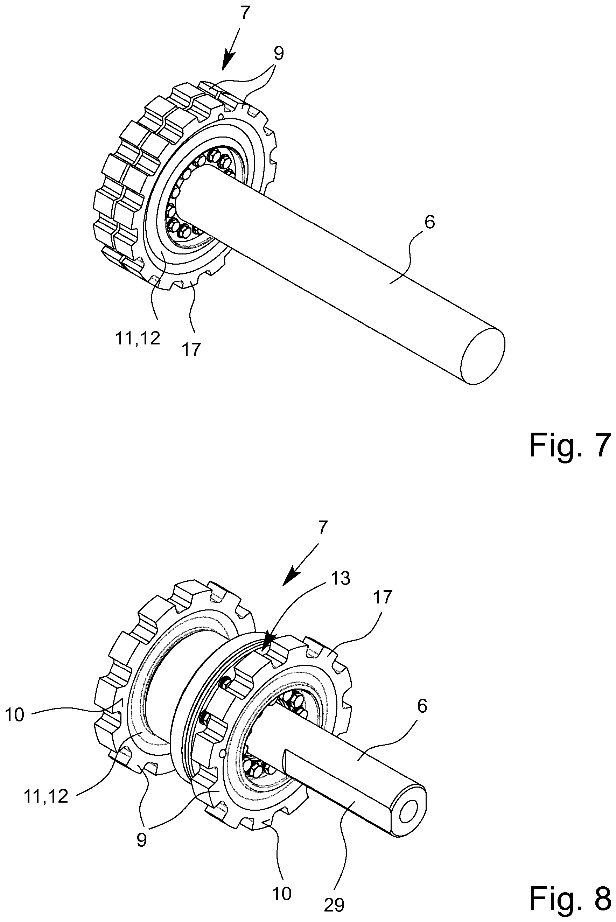

Eine Detailansicht des Lagerschildes 9 wird durch die Fig. 7 bzw. die Fig. 8 erhalten, die unterschiedliche Ausführungsformen des elastischen Lagermittels 7 verdeutlichen. Die Fig. 7 und 8 zeigen, dass das Lagerschild 9 zumindest im Wesentlichen ringförmig und hohlzylindrisch ausgebildet ist.

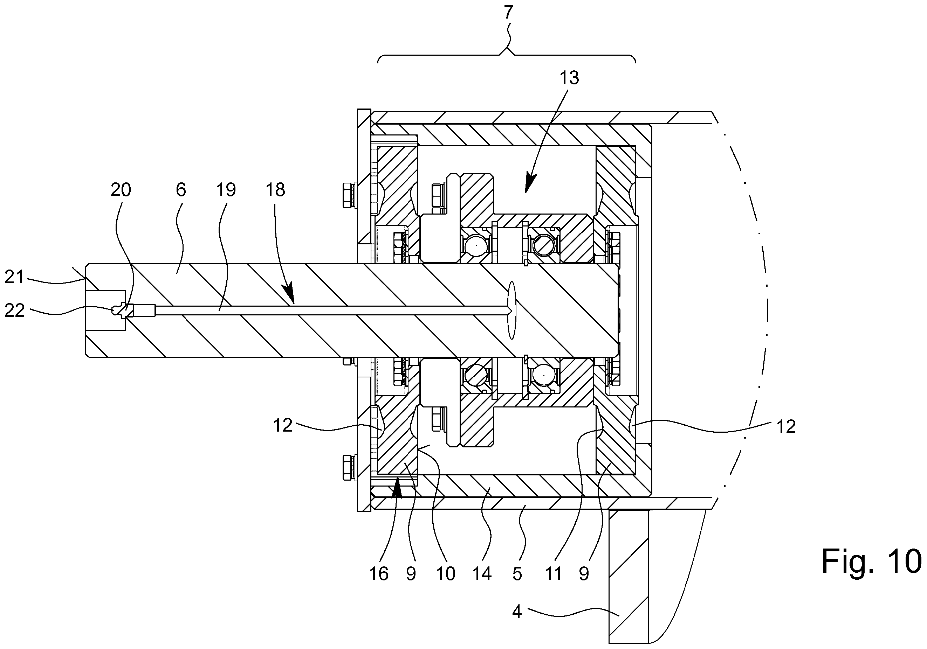

Ferner stellen die Fig. 7 und 8 dar, dass das Lagerschild 9 im Bereich des elastischen Materials an beiden Seitenflächen 10 eine umlaufende Materialschwächung 11 in Form einer Ausnehmung 12 aufweist. Die Ausnehmung 12 ist gemäß Fig. 10 in der Querschnittsfläche des Lagerschildes 9 im Bereich der Ausnehmung 12 spiegelsymmetrisch ausgebildet. Nicht dargestellt ist, dass in weiteren Ausführungsvarianten der Vorrichtung 1 nur eine Seitenfläche 10 des Lagerschildes 9 im Bereich des elastischen Materials eine Materialschwächung 11 aufweist, insbesondere wobei diese zumindest im Wesentlichen umlaufend ausgeführt ist und vorzugsweise die Form einer Ausnehmung 12 aufweist.

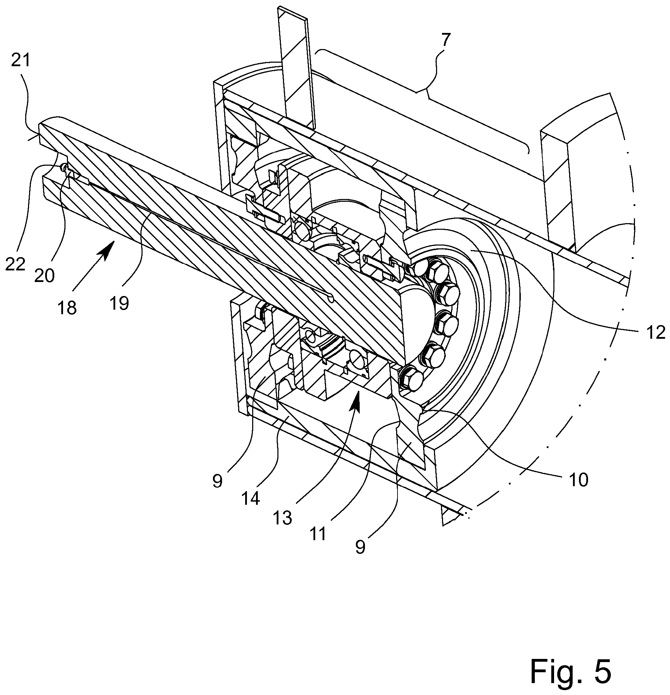

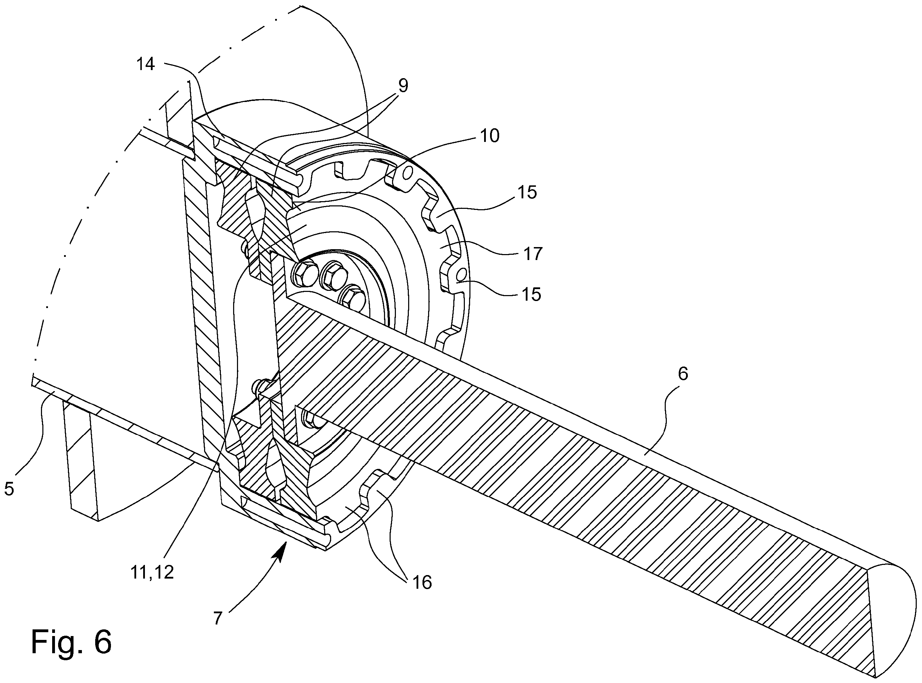

Darüber hinaus zeigen die Fig. 4 und 6, dass der Lagerzapfen 6 mit wenigstens einem Lagerschild 9, insbesondere gemäß Fig. 6 mit zwei Lagerschildern 9, fest verbunden ist. Diese feste Verbindung des Lagerzapfens 6 mit dem Lagerschild 9 und somit zu der Spiralwelle 3 ermöglicht es, dass der Lagerzapfen 6 gemeinsam mit der Spiralwelle 3 rotiert. Dagegen stellen die Fig. 4 und 5 dar, dass der Lagerzapfen 6, insbesondere abtriebsseitig, relativ zum Lagerschild 9 drehbar gelagert ist. Ferner verdeutlicht die Fig. 5, dass zwischen den beiden Lagerschildern 9 ein Wälzlager 13 vorgesehen ist. Der abtriebsseitige Lagerzapfen 6 gemäß Fig. 5 ist in dem dargestellten Ausführungsbeispiel feststehend ausgeführt, so dass sich der Lagerzapfen 6 nicht mit der Spiralwelle 3 mitdreht.

Außerdem verdeutlichen die Fig. 4 bis 6, dass das Lagerschild 9 in einem Lagergehäuse 14 der Spiralwelle 3 angeordnet ist, wobei das Lagergehäuse 14 fest mit dem Kernrohr 5 verbunden ist. Demgemäß dreht das Lagergehäuse 14 gemeinsam mit dem Lagerschild 9 mit der Spiralwelle 3 bei der Rotation mit.

In allen dargestellten Ausführungsbeispielen ist vorgesehen, dass das Lagerschild 9 formschlüssig mit dem Lagergehäuse 14 verbunden ist. Gemäß den dargestellten Ausführungsbeispielen wird die formschlüssige Verbindung des Lagergehäuses 14 mit dem Lagerschild 9 durch ein Zahnkupplung 16 zwischen dem Lagergehäuse 14 und dem elastischen Lagermittel 7 ausgebildet. Ferner verdeutlichen die Figuren, dass die Zahnkupplung 16 in den dargestellten Ausführungsbeispielen durch eine Innenverzahnung 15, die das Lagergehäuse 14 innenseitig aufweist, und durch eine zu der Innenverzahnung 15 korrespondierende Außenverzahnung 17 des Lagerschildes 9 ausgebildet wird. Die Fig. 5 und 6 zeigen, dass die Innenverzahnung 15 des Lagergehäuses 14 in die Außenverzahnung 17 des Lagerschildes 9 eingreift.

Darüber hinaus stellen die Fig. 7 und 8 dar, dass das Lagerschild 9 rotationssymmetrisch im Bereich der Ausnehmung 12 ausgebildet ist. Zusätzlich zeigen die Fig. 7 und 8, dass die Rotationssymmetrie des Lagerschildes 9 auch bis zur Außenverzahnung 17, jedoch exklusive der Außenverzahnung 17 des Lagerschildes 9, vorhanden ist.

In den dargestellten Ausführungsbeispielen weist das elastische Lagermittel 7, insbesondere sowohl antriebsseitig als auch abtriebsseitig, zwei Lagerschilder 9 auf. Allerdings ist darauf hinzuweisen, dass es grundsätzlich auch möglich ist, lediglich ein Lagerschild oder aber mehr als zwei Lagerschilder vorzusehen.

Des Weiteren verdeutlicht die Fig. 5, dass das Wälzlager 13 zwischen den Lagerschildern 9 vorgesehen ist. Dabei sind die Lagerschilder 9 in dem dargestellten Ausführungsbeispiel gemäß Fig. 5 fest mit dem Wälzlager 13 verbunden.

Gemäß Fig. 5 ist in dem, insbesondere abtriebsseitigen, Lagerzapfen 6 eine Schmiereinrichtung 18 vorgesehen. Diese Schmiereinrichtung 18 kann, in einem nicht dargestellten Verwendungsbeispiel, für Schmierfett genutzt werden. Insbesondere ist dabei der Bereich des abtriebsseitigen elastischen Lagermittels 7 zumindest im Wesentlichen luftdicht ausgeführt, so dass durch die Schmiereinrichtung 18 lediglich einzelne Tropfen des Schmierfetts in den Bereich des Wälzlagers 13 gebracht werden können. Die Schmiereinrichtung 18 weist gemäß Fig. 5 wenigstens einen Schmierkanal 19 im Lagerzapfen 6 mit wenigstens einem Schmiernippel 20 an der äußeren Stirnseite 21 des Lagerzapfens 6 auf. Die Fig. 10 zeigt in einer Querschnittsansicht die Schmiereinrichtung 18, wobei anhand von Fig. 10 deutlich wird, dass zur Abdeckung des Schmiernippels 20 eine Schutzkappe 22 an der äußeren Stirnseite 21 des Lagerzapfens 6 vorgesehen ist. Alternativ kann, in einem nicht dargestellten Ausführungsbeispiel, eine Schutzschraube 23 zur Abdeckung des Schmiernippels 20 der Schmiereinrichtung 18 genutzt werden. Des Weiteren zeigt die Fig. 1 eine Vorrichtung 1 zum Klassieren von Klassiergut mit einem Maschinenrahmen 2 und mit wenigstens zwei an den Maschinenrahmen 2 drehbar gelagerten Spiralwellen 3, wobei ein elastisches Lagermittel 7 mit wenigstens einer Lagerstütze 24 vorgesehen ist, um eine elastische Ausweichbewegung der Spiralwelle 3 zu ermöglichen. Gemäß Fig. 1 ist ein elastisches Lagermittel 7 mit wenigstens einer Lagerstütze 24 vorgesehen. Im dargestellten Ausführungsbeispiel sind abtriebsseitig sechs Lagerstützen 24 vorhanden. Die Vorrichtung 1 weist bevorzugt eine der vorgenannten Ausführungsvarianten auf. Darüber hinaus wird die Vorrichtung 1 in einem nicht dargestellten Anwendungsfall zur Verwendung in einem Steinbruch zur Klassierung von Erdmaterial, bevorzugt klebendes und lehmhaltiges Erdmaterial, und gröberen und/oder feineren Steinen verwendet.

Im Übrigen weist die Lagerstütze 24 gemäß Fig. 1 eine Lagerbuchse 25 zur elastischen Lagerung der Spiralwelle 3 sowie ein mit der Lagerbuchse 25 verbundenes, insbesondere als Blattfeder ausgebildetes, Federmittel auf. Durch dieses Federmittel ist ebenfalls eine elastische Bewegung der Spiralwelle 3 bzw. des Kernrohres 5 möglich, und zwar relativ zum Maschinenrahmen 2. Das mit der Lagerbuchse 25 verbundene Federmittel kann damit alternativ oder ergänzend zu der zuvor beschriebenen Ausführungsform der elastischen Lagerung des Kernrohres 5 über das elastische Lagermittel 7 realisiert werden.

Die elastische Lagerung der Spiralwelle 3 mittels des elastischen Lagermittels 7 mit wenigstens einer Lagerstütze 24 kann auch durch ein nicht dargestelltes Gelenk ausgeführt werden. Das Gelenk und/oder das elastische Lagermittel 7 ermöglichen dabei die Nachgiebigkeit des Stützlagers, insbesondere wobei eine nicht dargestellte Ausweichbewegung der Spiralwelle 3 quer zu Ihrer Drehachse 8 und bis zu 3 cm gewährleistet werden soll.

Nicht dargestellt ist, dass das Lagerschild 9 wenigstens ein Material aus einem formfesten und elastisch verformbaren Kunststoff, insbesondere ein Elastomer, bevorzugt ein Kautschuk-Elastomer, weiter bevorzugt ein Acrylnitril-Butadin-Kautschuk (NBR) und/oder Chloropren-Kautschuk (CR) und/oder Ethylen-Polypropylen-Dien-Kautschuk (EPDM), und/oder Naturkautschuk (NR), aufweist oder daraus besteht. Die zulässige Druckspannung des Materials des Lagerschildes 9 weist vorteilhafterweise einen zulässigen Wert von größer 0,01 N/mm², bevorzugt größer 1 N/mm², weiter bevorzugt zwischen 1 bis 50 N/mm², weiter bevorzugt weiter zwischen 1 bis 20 N/mm² und insbesondere zumindest im Wesentlichen 15 N/mm², auf.

Darüber hinaus verdeutlicht die Fig. 4, dass das abtriebsseitige Lagermittel 7 (siehe Detailansicht A) zwei weiter voneinander beabstandete Lagerschilder 9 als das antriebsseitige elastische Lagermittel 7 (siehe Detailansicht B) aufweist. Die größere Beabstandung der Lagerschilder 9 beim elastischen Lagermittel 7 auf der Abtriebsseite ergibt sich insbesondere dadurch, dass zwischen den Lagerschildern 9 ein Wälzlager 13 zur drehbaren Lagerung der Spiralwelle 3 bzw. des Kernrohres 5 vorgesehen ist.

Weiterhin ist in den Ausführungsbeispielen nicht dargestellt, dass eine, insbesondere steife, Lagestütze 24 mit einem Maschinenelement, insbesondere an dem unteren Ende und/oder an dem Fuß der Lagerstütze 24, elastisch gelagert sein kann. Vorzugsweise ist das Maschinenelement in Form eines Elastomer-Lagerblockes ausgeführt. Des Weiteren weist das Maschinenelement bevorzugt einen formfesten und elastisch verformbaren Kunststoff als Material, insbesondere ein Elastomer, bevorzugt ein Kautschukelastomer, weiter bevorzugt ein Acrylnitril-Butadien-Kautschuk (NBR) und/oder Chloropren-Kautschuk (CR) und/oder Ethylen-Propylen-Dien-Kautschuk (EPDM), und/oder Naturkautschuk (NR), auf. Insbesondere kann das Material des Maschinenelementes dasselbe Material wie das Lagerschild 9 des, insbesondere antriebsseitigen, elastischen Lagermittels 7 aufweisen.

Im Übrigen ist in einem nicht dargestellten Anwendungsbeispiel der Vorrichtung 1 vorgesehen, dass das Klassiergut eine Verweildauer von über 1 s, bevorzugt über 3 s, weiter bevorzugt zwischen 4 bis 20 s und insbesondere zumindest im Wesentlichen zwischen 5 bis 15 s, aufweist. Diese Verweildauer im Sekundenbereich ermöglicht eine saubere Klassierung des Klassiergutes.

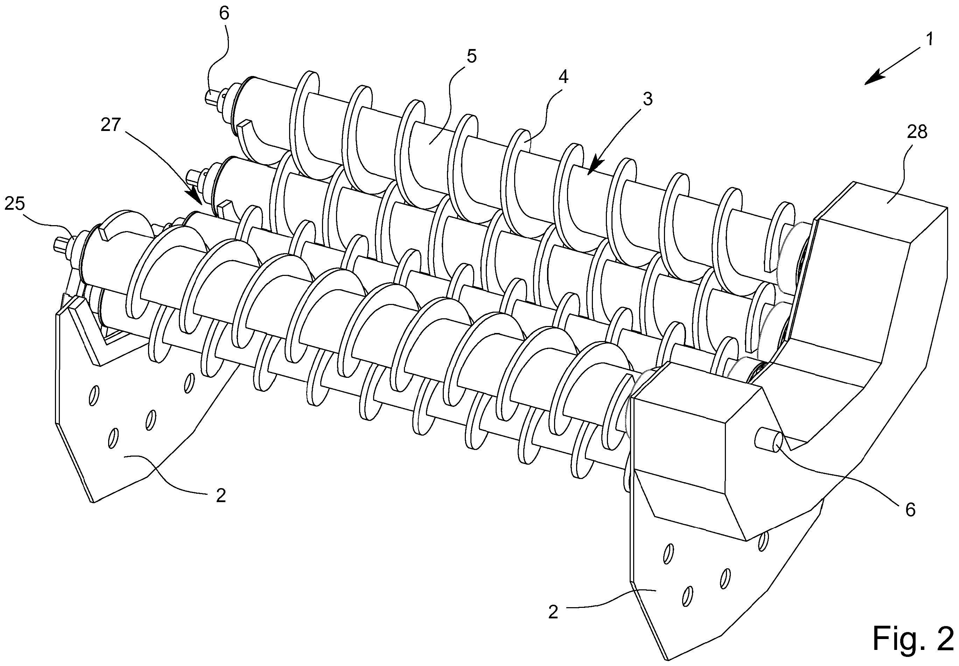

Anhand von Fig. 2 wird deutlich, dass die Vorrichtung 1 eine Mehrzahl von Spiralwellen 3 aufweist. Die Spiralwellen 3 greifen gemäß Fig. 2 ineinander. Dabei wird der lichte Abstand zwischen zwei benachbarten Spiralwellen 3 durch die Kernrohre 5 und die äußeren Schraubenwendel 4 gekennzeichnet.

Darüber hinaus ist gemäß Fig. 2 vorgesehen, dass antriebsseitig die Lagerzapfen 6, bis auf einen Lagerzapfen 6, durch ein Gehäuse des Antriebs 28 abgedeckt werden. Ein Lagerzapfen 6 einer Spiralwelle 3 ragt dabei aus dem Gehäuse des Antriebs 28 hinaus, insbesondere wobei dieser Lagerzapfen 6 zur Anordnung an einen Motor vorgesehen ist. Nicht dargestellt ist, dass die Spiralwellen 3 innerhalb des Gehäuses des Antriebs 28 miteinander verbunden sind, so dass durch den Antrieb einer Spiralwelle 3 mittels eines Motors alle weiteren Spiralwellen 3 der Vorrichtung 1 angetrieben werden.

Es ist vorgesehen, dass die Spiralwellen 3 um ihre Längsachse bzw. Drehachse 8, insbesondere ihre Rotationsachse, rotiert werden. Diese Rotation kann insbesondere durch einen nicht dargestellten Motor hervorgerufen werden. In einer weiteren nicht dargestellten Ausführungsvariante kann vorgesehen sein, dass eine Mehrzahl von Motoren und/oder Antrieben verwendet wird, insbesondere mit einer Synchronisation der Drehwinkel.

Weiter ist nicht dargestellt, dass wenigstens zwei benachbarte Spiralwellen 3 denselben Rotationsdrehsinn aufweisen und dass die Drehachsen 8 von wenigstens drei Spiralwellen 3 nicht in einer gemeinsamen Ebene angeordnet sind.

Die Spiralwellen 3 sind gemäß Fig. 1 und 2 wenigstens an einer Seite am Maschinenrahmen 2 abgestützt.

Im Übrigen stellt die Fig. 1 dar, dass eine durch die Spiralwellen 3 gebildete Klassierfläche 26 wenigstens in einem Teilbereich gewölbt ausgebildet ist. Zusätzlich ist die Klassierfläche 26 in einem Teilbereich gewölbt und in einem anderen Teilbereich eben ausgebildet. Die Wölbung der Klassierfläche 26 ist so ausgestaltet, dass sich eine Mulde 27 ausbildet. In einem nicht dargestellten Ausführungsbeispiel kann auch die Klassierfläche 26 ein Teil einer Mulde 27 sein.

Gemäß Fig. 1 und 2 ist vorgesehen, dass die Spiralwellen 3 unterschiedliche Kernrohre 5 in der Vorrichtung 1 aufweisen. Die Kernrohre 5 sind dabei in der Mitte der Klassierfläche 26 mit einem größeren Durchmesser versehen. Zusätzlich können die Kernrohre 5 in der Mitte der Klassierfläche 26, insbesondere im Bereich des tiefsten Punktes der Mulde 27, eine größere Wandstärke aufweisen.

Außerdem ist nicht dargestellt, dass die Spiralwellen 3 mit der gleichen Geschwindigkeit und unterschiedlichen Rotationsdrehrichtungen angetrieben werden.

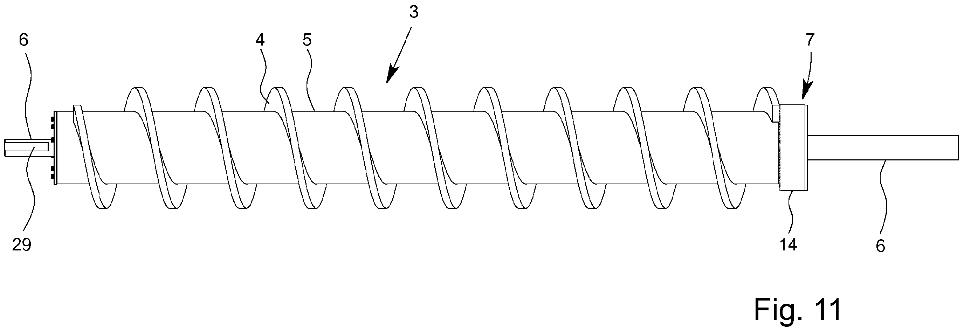

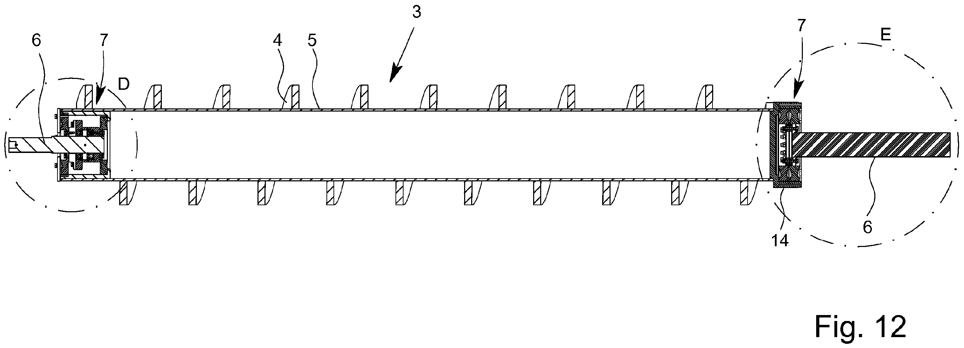

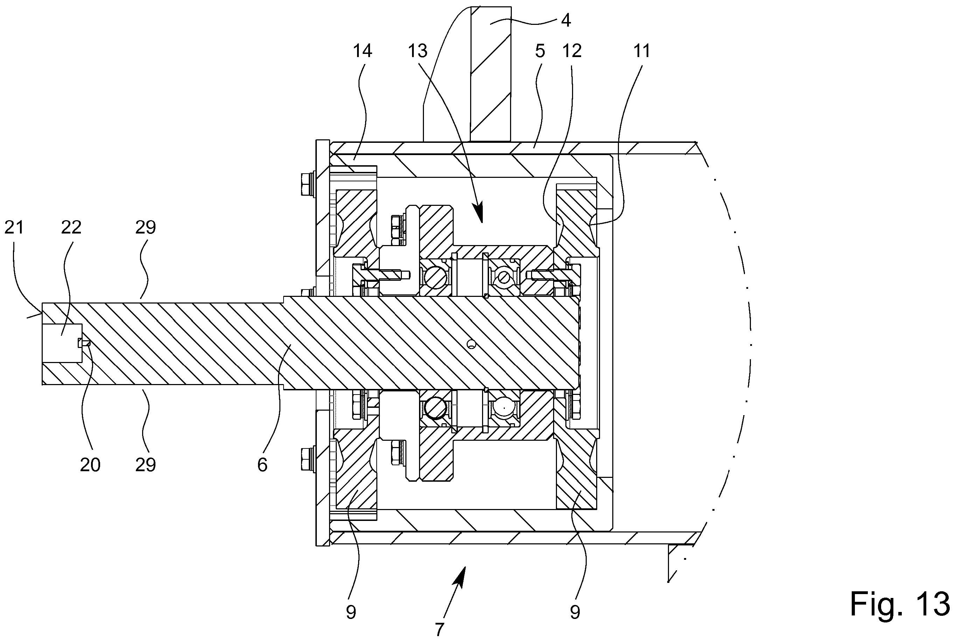

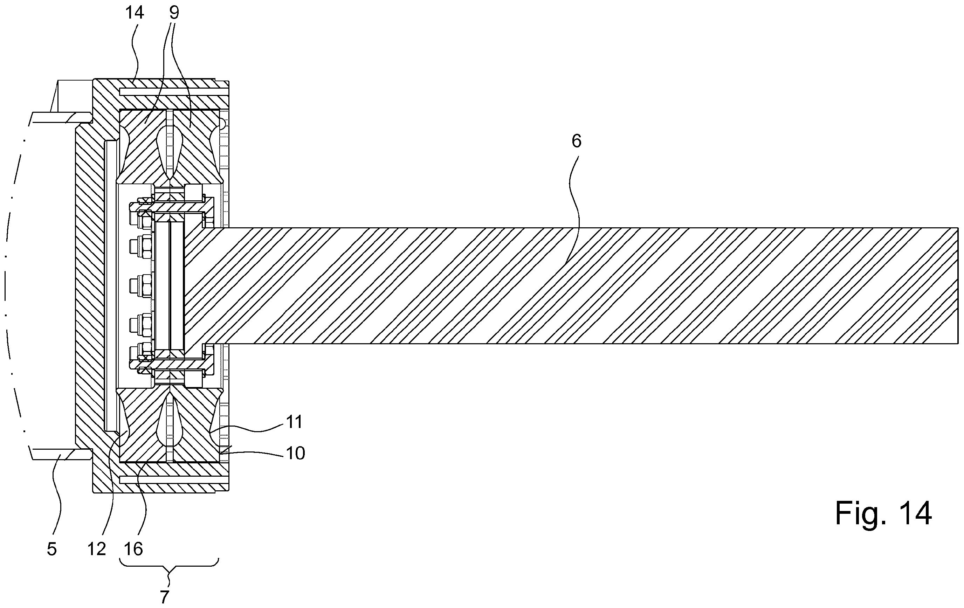

Die Fig. 11 zeigt eine weitere Ausführungsform der Spiralwelle 3 bzw. eine Vorderansicht der Spiralwelle 3 gemäß Fig. 3. Die Fig. 12 stellt eine Querschnittsansicht der Spiralwelle 3 gemäß Fig. 11 dar. Die Fig. 13 und 14 verdeutlichen die Detailansichten D und E der Fig. 12. Die Fig. 13 zeigt im Gegensatz zur Fig. 5, dass an dem abtriebsseitigen Lagerzapfen 6 wenigstens eine Ausnehmung 29 in Form einer Abflachung vorgesehen ist, wobei diese Ausnehmung 29 zur Anordnung in der Lagerbuchse 25 dient.

### Bezugszeichenliste:

- 1: Vorrichtung zum Klassieren
- 2: Maschinenrahmen
- 3: Spiralwelle
- 4: äußere Schraubenwendel
- 5: Kernrohr
- 6: Lagerzapfen
- 7: elastisches Lagermittel
- 8: Drehachse
- 9: Lagerschild
- 10: Seitenfläche des Lagerschilds
- 11: Materialschwächung
- 12: Ausnehmung
- 13: Wälzlager
- 14: Lagergehäuse
- 15: Innenverzahnung
- 16: Zahnkupplung
- 17: Außenverzahnung
- 18: Schmiereinrichtung
- 19: Schmierkanal
- 20: Schmiernippel
- 21: äußere Stirnseite des Lagerschilds
- 22: Schutzkappe
- 23: Schutzschraube
- 24: Lagerstütze
- 25: Lagerbuchse
- 26: Klassierfläche
- 27: Mulde
- 28: Gehäuse des Antriebs
- 29: Ausnehmung

## Patentansprüche

1. Vorrichtung zum Klassieren (1) von Klassiergut, vorzugsweise in zwei Fraktionen, bevorzugt von Erdmaterial, wie klebendes lehmhaltiges Erdmaterial, insbesondere vorgesehen zur Verwendung in einem Steinbruch, mit einem Maschinenrahmen (2) und mit wenigstens zwei an dem Maschinenrahmen (2) drehbar gelagerten Spiralwellen (3), wobei wenigstens eine Spiralwelle (3) ein wenigstens eine äußere Schraubenwendel (4) aufweisendes Kernrohr (5) und wenigstens einen Lagerzapfen (6) aufweist,
**dadurch gekennzeichnet,**
**dass** das Kernrohr (5) mittels wenigstens eines elastischen Lagermittels (7) relativ zum Lagerzapfen (6) elastisch gelagert ist.

2. Vorrichtung nach Anspruch 1, **dadurch gekennzeichnet, dass** die Spiralwelle (3) beidseitig über je einen Lagerzapfen (6) drehbar gelagert ist.

3. Vorrichtung nach Anspruch 1 oder 2, **dadurch gekennzeichnet, dass** das elastische Lagermittel (7) derart ausgebildet ist, dass es eine elastische Ausweichbewegung des Kernrohres (5) quer zur Drehachse (8) der Spiralwelle (3) bis zu 3 cm ermöglicht.

4. Vorrichtung nach einem der vorhergehenden Ansprüche, **dadurch gekennzeichnet, dass** das elastische Lagermittel (7) wenigstens ein ein elastisches Material aufweisendes, vorzugsweise im Wesentlichen ringförmig und/oder hohlzylindrisch ausgebildetes, Lagerschild (9) aufweist und dass das Lagerschild (9) zwischen dem Kernrohr (5) und dem Lagerzapfen (6) der Spiralwelle (3) elastisch wirksam ist.

5. Vorrichtung nach einem der vorhergehenden Ansprüche, **dadurch gekennzeichnet, dass** das Lagerschild (9) im Bereich des elastischen Materials an wenigstens einer Seitenfläche (10) eine, insbesondere zumindest im Wesentlichen umlaufende, Materialschwächung (11), vorzugsweise in Form einer Ausnehmung (12), aufweist, insbesondere wobei die Querschnittsfläche des Lagerschildes (9) im Bereich der Ausnehmung (12) spiegelsymmetrisch ausgebildet ist.

6. Vorrichtung nach einem der vorhergehenden Ansprüche, **dadurch gekennzeichnet, dass** der Lagerzapfen (6) mit wenigstens einem Lagerschild (9) fest verbunden ist oder dass der Lagerzapfen (6) relativ zum Lagerschild (9), insbesondere mittels eines Wälzlagers (13), drehbar gelagert ist.

7. Vorrichtung nach einem der vorhergehenden Ansprüche, **dadurch gekennzeichnet, dass** das Lagerschild (9) in einem Lagergehäuse (14) der Spiralwelle (3) angeordnet ist und vorzugsweise formschlüssig mit dem Lagergehäuse (14) verbunden ist und dass das Lagergehäuse (14) fest mit dem Kernrohr (5) verbunden ist.

8. Vorrichtung nach einem der vorhergehenden Ansprüche, **dadurch gekennzeichnet, dass** das Lagergehäuse (14) innenseitig eine Innenverzahnung (15) aufweist und/oder dass eine Zahnkupplung (16) zwischen dem Lagergehäuse (14) und dem Lagermittel (7) vorgesehen ist und/oder dass das wenigstens ein Lagerschild (9) eine zu der Innenverzahnung (15) des Lagergehäuses (14) korrespondierende Außenverzahnung (17) aufweist, insbesondere wobei die Innenverzahnung (15) des Lagergehäuses (14) in die Außenverzahnung (17) des Lagerschildes (9) eingreift.

9. Vorrichtung nach einem der vorhergehenden Ansprüche, **dadurch gekennzeichnet, dass** das elastische Lagermittel (7) zwei Lagerschilder (9) aufweist und dass, vorzugsweise, das Wälzlager (13) zwischen den Lagerschildern (9) vorgesehen ist, insbesondere wobei die Lagerschilder (9) mit dem Wälzlager (13) fest verbunden sind.

10. Vorrichtung nach einem der vorhergehenden Ansprüche, **dadurch gekennzeichnet, dass** im Bereich des elastischen Lagermittels (7), insbesondere abtriebsseitig, eine Schmiereinrichtung (18), insbesondere für Schmierfett, vorgesehen ist, insbesondere wobei wenigstens ein Schmierkanal (19) im Lagerzapfen (6) mit wenigstens einem Schmiernippel (20) an der äußeren Stirnseite (24) des Lagerzapfens (6) vorgesehen ist, insbesondere wobei dem Schmiernippel (20) eine Schutzkappe (22) und/oder Schutzschraube (23) zur Abdeckung zugeordnet ist.

11. Vorrichtung nach einem der vorhergehenden Ansprüche, **dadurch gekennzeichnet, dass** die Spiralwellen (3) unterschiedliche Kernrohre (5) aufweisen, insbesondere wobei die in der Mitte einer Klassierfläche (26) angeordneten Kernrohre (5) einen größeren Durchmesser und/oder eine größere Wandstärke aufweisen.

12. Vorrichtung nach einem der vorhergehenden Ansprüche, **dadurch gekennzeichnet, dass**, insbesondere abtriebsseitig, wenigstens ein elastisches Lagermittel (7) mit wenigstens einer Lagerstütze (24) vorgesehen ist, um eine elastische Ausweichbewegung der Spiralwelle (3) zu ermöglichen.

13. Vorrichtung nach Anspruch 12, **dadurch gekennzeichnet, dass** die Lagerstütze (24) eine Lagerbuchse (25) und ein mit der Lagerbuchse (25) verbundenes, vorzugsweise als Blattfeder ausgebildetes, Federmittel aufweist und/oder dass die, insbesondere steife, Lagestütze (24) mit einem, vorzugsweise ein elastisches Material aufweisendes, Maschinenelement elastisch gelagert wird.

## Claims

1. Apparatus (1) for classifying material to be classified, preferably into two fractions, preferably of soil, such as sticky, clayey soil, in particular intended for use in a quarry, comprising a machine frame (2) and at least two spiral shafts (3) rotatably mounted on the machine frame (2), wherein at least one spiral shaft (3) having a core tube (5) comprising at least one outer screw helix (4) and at least one bearing journal (6),
**characterized in that**
the core tube (5) is mounted elastically relative to the bearing journal (6) by means of at least one elastic bearing means (7).

2. Apparatus according to claim 1, **characterized in that** the spiral shaft (3) is rotatably mounted on both sides by a respective bearing journal (6).

3. Apparatus according to claim 1 or 2, **characterized in that** the elastic bearing means (7) is designed in such a way that it allows an elastic evasive movement of the core tube (5) transversely to the axis of rotation (8) of the spiral shaft (3) by up to 3 cm.

4. Apparatus according to one of the preceding claims, **characterized in that** the elastic bearing means (7) has at least one bearing plate (9) which has an elastic material, preferably configured substantially annular and/or hollow-cylindrical, and **in that** the bearing plate (9) is elastically operative between the core tube (5) and the bearing journal (6) of the spiral shaft (3).

5. Apparatus according to one of the preceding claims, **characterized in that** the bearing plate (9) has, in the region of the elastic material on at least one side surface (10), a material reduction (11), in particular an at least substantially circumferential reduction, preferably in the form of a recess (12), in particular wherein the cross-sectional area of the bearing plate (9) in the region of the recess (12) is formed in mirror symmetry.

6. Apparatus according to one of the preceding claims, **characterized in that** the bearing journal (6) is firmly connected to at least one bearing plate (9) or **in that** the bearing journal (6) is rotatably mounted relative to the bearing plate (9), in particular by means of a roller bearing (13).

7. Apparatus according to one of the preceding claims, **characterized in that** the bearing plate (9) is arranged in a bearing housing (14) of the spiral shaft (3) and is preferably joined by positive locking to the bearing housing (14) and **in that** the bearing housing (14) is firmly joined to the core tube (5).

8. Apparatus according to one of the preceding claims, **characterized in that** the bearing housing (14) has internal teeth (15) on the inside and/or that a toothed coupling (16) is provided between the bearing housing (14) and the bearing means (7) and/or that the at least one bearing plate (9) has external teeth (17) corresponding to the internal teeth (15) of the bearing housing (14), in particular wherein the internal teeth (15) of the bearing housing (14) engage with the external teeth (17) of the bearing plate (9).

9. Apparatus according to one of the preceding claims, **characterized in that**, the elastic bearing means (7) comprises two bearing plates (9) and **in that**, preferably, the roller bearing (13) is provided between the bearing plates (9), in particular wherein the bearing plates (9) are firmly joined to the roller bearing (13).

10. Apparatus according to one of the preceding claims, **characterized in that** in particular at the output end, in the region of the elastic bearing means (7) a lubricating device (18), in particular for lubricating grease, is provided, in particular wherein at least one lubricating duct (19) is provided in the bearing journal (6) with at least one lubricating nipple (20) on the external end face (24) of the bearing journal (6), in particular wherein a protective cap (22) and/or protective screw (23) is associated with the lubricating nipple (20) for covering.

11. Apparatus according to one of the preceding claims, **characterized in that** the spiral shafts (3) have different core tubes (5), in particular wherein the core tubes (5) situated in the middle of a classifying surface (26) have a larger diameter and/or a greater wall thickness.

12. Apparatus according to one of the preceding claims, **characterized in that**, in particular at the output end, at least one elastic bearing means (7) with at least one bearing support (24) is provided to enable an elastic evasive movement of the spiral shaft (3).

13. Apparatus according to claim 12, **characterized in that** the bearing support (24) has a bearing bush (25) and a spring means connected to the bearing bush (25), preferably designed as a leaf spring, and/or **in that** the, in particular rigid, bearing support (24) is elastically mounted with a machine element preferably having an elastic material.

## Revendications

1. Appareil (1) pour classer un matériau à classer, de préférence en deux fractions, de préférence de sol, tel qu'un sol argileux collant, en particulier destiné à être utilisé dans une carrière de pierre, comprenant un châssis de machine (2) et au moins deux arbres à spirale (3) montés de manière rotative sur le châssis de machine (2), dans lequel au moins un arbre à spirale (3) comporte un tube central (5) comprenant au moins une hélice de vis externe (4) et au moins un tourillon de palier (6),
**caractérisé en ce que**
le tube central (5) est monté élastiquement par rapport au tourillon de palier (6) au moyen d'au moins un moyen de palier élastique (7).

2. Appareil selon la revendication 1, **caractérisé en ce que** l'arbre à spirale (3) est monté de manière rotative des deux côtés par un tourillon de palier (6) respectif.

3. Appareil selon la revendication 1 ou 2, **caractérisé en ce que** le moyen de support élastique (7) est conçu de telle sorte qu'il permet un mouvement élastique de relâchement du tube central (5) transversalement à l'axe de rotation (8) de l'arbre à spirale (3) jusqu'à 3 cm.

4. Appareil selon l'une des revendications précédentes, **caractérisé en ce que** le moyen de palier élastique (7) présente au moins une plaque portante (9) en matériau élastique, de préférence de forme essentiellement annulaire et/ou cylindrique creuse, et **en ce que** la plaque portante (9) agit de manière élastique entre le tube central (5) et le tourillon de palier (6) de l'arbre à spirale (3).

5. Appareil selon l'une des revendications précédentes, **caractérisé en ce que** la plaque portante (9) présente, dans la zone du matériau élastique, sur au moins une surface latérale (10), une réduction de matière (11), en particulier une réduction au moins essentiellement circonférentielle, de préférence sous la forme d'un évidement (12), la surface de section transversale de la plaque portante (9) dans la zone de l'évidement (12) étant en particulier réalisée en symétrie spéculaire.

6. Appareil selon l'une des revendications précédentes, **caractérisé en ce que** le tourillon de palier (6) est relié fixement à au moins une plaque portante (9) ou **en ce que** le tourillon de palier (6) est monté rotatif par rapport à la plaque portante (9), en particulier au moyen d'un roulement à rouleaux (13).

7. Appareil selon l'une des revendications précédentes, **caractérisé en ce que** la plaque portante (9) est disposée dans un logement de palier (14) de l'arbre à spirale (3) et est de préférence reliée par complémentarité de forme au logement de palier (14) et **en ce que** le logement de palier (14) est relié solidement au tube central (5).

8. Appareil selon l'une des revendications précédentes, **caractérisé en ce que** le logement de palier (14) présente une denture intérieure (15) et/ou **en ce qu'**un accouplement denté (16) est prévu entre le logement de palier (14) et le moyen de palier (7) et/ou **en ce que** la au moins une plaque portante (9) présente une denture extérieure (17) correspondant à la denture intérieure (15) du logement de palier (14), en particulier dans lequel la denture intérieure (15) du logement de palier (14) s'engage dans la denture extérieure (17) de la plaque portante (9).

9. Appareil selon l'une des revendications précédentes, **caractérisé en ce que** e moyen de palier élastique (7) comprend deux plaques portantes (9) et que, de préférence, le roulement à rouleaux (13) est prévu entre les plaques portantes (9), en particulier dans lequel les plaques portantes (9) sont fermement reliées au roulement à rouleaux (13).

10. Appareil selon l'une des revendications précédentes, **caractérisé en ce qu'**il est prévu, en particulier du côté de la sortie, dans la zone du moyen de palier élastique (7), un dispositif de lubrification (18), en particulier pour la graisse de lubrification, en particulier dans lequel il est prévu dans le tourillon de palier (6) au moins un canal de lubrification (19) avec au moins un embout de lubrification (20) sur la face frontale extérieure (24) du tourillon de palier (6), en particulier dans lequel un capuchon de protection (22) et/ou une vis de protection (23) est associé à l'embout de lubrification (20) pour le recouvrir.

11. Appareil selon l'une des revendications précédentes, **caractérisé en ce que** les arbres à spirale (3) ont des tubes centraux (5) différents, en particulier dans lequel les tubes centraux (5) situés au milieu d'une surface de classification (26) ont un plus grand diamètre et/ou une plus grande épaisseur de paroi.

12. Appareil selon l'une des revendications précédentes, **caractérisé en ce que**, en particulier à l'extrémité de sortie, il est prévu au moins un moyen de palier élastique (7) avec au moins un support de palier (24) pour permettre un mouvement élastique de relâchement de l'arbre à spirale (3).

13. Appareil selon la revendication 12, **caractérisé en ce que** le support de palier (24) présente un coussinet de palier (25) et un moyen de ressort relié au coussinet de palier (25), de préférence conçu comme un ressort à lame, et/ou **en ce que** le support de palier (24), en particulier rigide, est monté de manière élastique avec un élément de machine présentant de préférence un matériau élastique.
